# EUROPEAN PATENT SPECIFICATION

(11) **EP 4 391 648 B1**
(45) Date of publication and mention of the grant of the patent: **12.08.2026**
(21) Application number: 22874817.4
(22) Date of filing: 26.09.2022
(51) Int. Cl.: H04L 61/4511, H04W 8/08

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 30.09.2021 CN 202111166449
(43) Date of publication of application: 26.06.2024
(73) Proprietor: Huawei Technologies Co., Ltd., Shenzhen, Guangdong 518129 (CN)
(72) Inventor: WEI, Xinpeng, Shenzhen, Guangdong 518129 (CN); ZHU, Fenqin, Shenzhen, Guangdong 518129 (CN)
(74) Representative: Goddar, Heinz J.
(86) International application number: PCT/CN2022/121190
(87) International publication number: WO 2023/051431

(56) References cited:
- WO-A1-2021/178586
- CN-A- 113 115 480
- CN-A- 113 366 816
- CN-A- 113 453 292
- "3rd Generation Partnership Project; Technical Specification Group Services and System Aspects; 5G System Enhancements for Edge Computing; Phase 2 (Release 18)", no. V1.0.0, 4 September 2022 (2022-09-04), pages 1 - 190, XP052211377, Retrieved from the Internet <URL:https://ftp.3gpp.org/Specs/archive/23_series/23.700-48/23700-48-100.zip 23700-48-100.docx> [retrieved on 20220904]
- "3rd Generation Partnership Project; Technical Specification Group Services and System Aspects; 5G System Enhancements for Edge Computing; Stage 2 (Release 17)", vol. SA WG2, no. V0.1.0, 15 March 2021 (2021-03-15), pages 1 - 32, XP052000003, Retrieved from the Internet <URL:https://ftp.3gpp.org/Specs/archive/23_series/23.548/23548-010.zip 23548-010-MCCclean.docx> [retrieved on 20210315]
- HUAWEI, HISILICON: "Clarification on EAS discovery via EASDF", 3GPP TSG-SA WG2 MEETING #145E, S2-2104384, 10 May 2021 (2021-05-10), XP052004694
- QUALCOMM INCORPORATED, CONVIDA WIRELESS, KPN, VODAFONE, SK TELECOM, DEUTSCHE TELEKOM, BT, ORANGE, ERICSSON, TELECOM ITALIA, TNO, N: "Way Forward for EASDF based EAS discovery", 3GPP TSG-SA #93E E-MEETING, SP-210854, 8 September 2021 (2021-09-08), XP052051954

## Description

### TECHNICAL FIELD

This application relates to the communication field, and more specifically, to a communication method and apparatus.

### BACKGROUND

In an edge computing (edge computing, EC) deployment scenario, some services may be provided by a plurality of edge application servers (edge application servers, EASs) deployed at a network edge. The plurality of EASs may provide same services and content, and most of the EASs have different Internet Protocol (Internet Protocol, IP) addresses. In the EC scenario, when user equipment (user equipment, UE) requests to access the service, the user equipment accesses an available EAS that is closer to the UE. In view of this, a proper IP address of the EAS is important.

In some cases, the UE may leave coverage of a home public land mobile network (public land mobile network, PLMN) (home PLMN, HPLMN) and access a visited PLMN (visited PLMN, VPLMN) in a home routed (home routed, HR) roaming manner, and the VPLMN provides services for the UE.

WO 2021/178586 A1 describes a UE, which performs the following method: receive signaling indicating an address of a domain name system (DNS) server; receive signaling indicating an address of an edge DNS server; intercept a DNS request from an application; change a destination address of the DNS request to the address of the edge DNS server; intercept a DNS response from the edge DNS server that is sent in response to the DNS request; and upon determining that the DNS response does not comprise a failure notification, change a source address of the DNS response to the address of the DNS server.
The 3GPP technical specification TS 23.548, v0.1.0, March 15, 2021, describes edge relocation using EAS IP replacement, wherein EAS IP replacement enables a local PSA UPF to replace a source EAS IP address and port number with a target EAS IP address and port number for the destination IP address and destination port number field of the uplink traffic and replace the target EAS IP address and port number with the source EAS IP address and port number for the source IP address and source port number field of the downlink traffic based on AF influence information for EAS IP replacement (i.e. support of EAS IP replacement capability, source EAS IP address and port number, target EAS IP address and port number). The source EAS IP address and port number are the destination IP address and port number of the uplink traffic, generated by the UE, for a service subject to edge computing. The source EAS IP address is the one discovered by the UE for a service subject to edge computing.

### SUMMARY

Embodiments of this application provide a communication method and apparatus, so that a user plane network element of a VPLMN intercepts a DNS query message from roaming UE and forwards the DNS query message to a corresponding edge application server discovery network element of the VPLMN, and the roaming UE can access an edge application service.

The invention is defined by the independent claims. Advantageous embodiments of the invention are given by the dependent claims.

### BRIEF DESCRIPTION OF DRAWINGS

FIG. 1 is a schematic diagram of a network architecture;
FIG. 2 is a schematic diagram of another network architecture;
FIG. 3 is a schematic diagram of HR roaming and LBO roaming;
FIG. 4 is a schematic diagram in which UE roams from an HPLMN to a VPLMN;
FIG. 5 is a schematic diagram of a communication method 500 according to an embodiment of this application;
FIG. 6 is a schematic diagram of a communication method according to an embodiment of this application;
FIG. 7 is a schematic flowchart of a communication method 700 according to an embodiment of this application;
FIG. 8 is a schematic flowchart of another communication method 800 according to an embodiment of this application;
FIG. 9 is a schematic flowchart of another communication method 900 according to an embodiment of this application;
FIG. 10 is a schematic flowchart of another communication method 1000 according to an embodiment of this application;
FIG. 11 is a schematic block diagram of a communication apparatus 1100 according to an embodiment of this application; and
FIG. 12 is a schematic block diagram of another communication apparatus 1200 according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, and the like. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine to machine (machine to machine, M2M) communication, machine type communication (machine type communication, MTC), Internet of Things (Internet of Things, IoT) communication system, and another communication system.

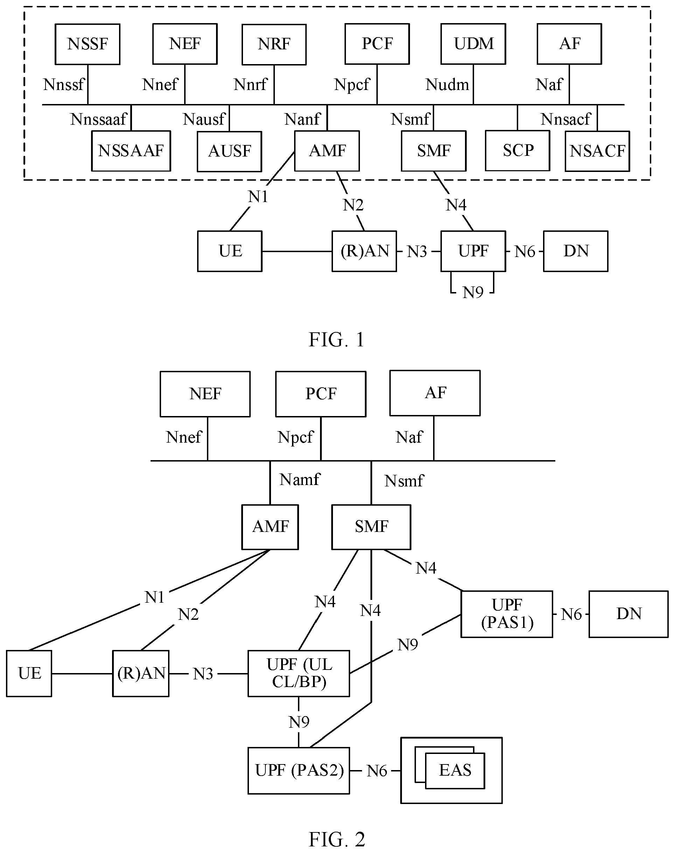

First, a network architecture applicable to this application is briefly described below with reference to FIG. 1 and FIG. 2.

For example, FIG. 1 is a schematic diagram of a network architecture.

As shown in FIG. 1, a 5th generation system (5th generation system, 5GS) is used as an example of the network architecture. The network architecture may include but is not limited to: a network slice specific authentication and authorization function (network slice specific authentication and authorization function, NSSAAF), a network slice selection function (network slice selection function, NSSF), an authentication server function (authentication server function, AUSF), unified data management (unified data management, UDM), a network exposure function (network exposure function, NEF), an NF repository function (NF repository function, NRF), a policy control function (policy control function, PCF), an application function (application function, AF), an access and mobility management function (access and mobility management function, AMF), a session management function (session management function, SMF), a service communication proxy (service communication proxy, SCP), and a network slice admission control function (network slice admission control function, NSACF), user equipment (user equipment, UE), a radio access network device, a user plane function (user plane function, UPF), a data network (data network, DN), and the like.

The following briefly describes network elements shown in FIG. 1.
1. The UE may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device, an in-vehicle device, or the like having a wireless connection function. Currently, some examples of terminals include: a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device that has a wireless communication function, a computing device or another processing device connected to a wireless modem, a wearable device, a terminal device in a 5G network, a terminal device in a future evolved public land mobile network (public land mobile network, PLMN), and the like. This is not limited in embodiments of this application.

By way of example rather than limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, shoes, and the like. The wearable device is a portable device that can be directly worn on the body or integrated into clothes or an accessory of a user. The wearable device is not merely a hardware device, but implements a powerful function through software support, data exchange, and cloud interaction. In a broad sense, wearable intelligent devices include full-featured and large-sized devices that can implement all or some of functions without depending on smartphones, for example, smart watches, smart glasses, and the like, and include devices that focus on only one type of application function and need to collaboratively work with another device such as smartphones, for example, various smart bands, smart jewelry for monitoring physical signs, and the like.

In addition, the terminal device in embodiments of this application may alternatively be a terminal device in an IoT system. IoT is an important part of future development of information technologies. A main technical feature of the IoT is connecting a thing to a network by using a communication technology, to implement an intelligent network for interconnection between a person and a machine or between things.

It should be noted that the terminal device and the access network device may communicate with each other by using an air interface technology (for example, an NR technology, an LTE technology, or the like). Terminal devices may also communicate with each other by using an air interface technology (for example, an NR technology, an LTE technology, or the like).

In embodiments of this application, an apparatus configured to implement a function of the terminal device may be a terminal device, or may be an apparatus that can support the terminal device in implementing the function, for example, a chip system or a chip. The apparatus may be installed in the terminal device. In embodiments of this application, the chip system may include a chip, or may include a chip and another discrete component.

2. The (radio) access network ((radio) access network, (R) AN) device may provide a function of accessing a communication network for an authorized user in a specific area, and may specifically include a wireless network device in a 3rd generation partnership project (3rd generation partnership project, 3GPP) network, or may include an access point in a non-3GPP (non-3GPP) network. For ease of description, the following uses an AN device for representation.

The AN device may use different radio access technologies. Currently, there are two types of radio access technologies, namely, a 3GPP access technology (for example, a radio access technology applied to a 3rd generation (3rd generation, 3G), 4th generation (4th generation, 4G), or 5G system) and a non-3GPP (non-3GPP) access technology. The 3GPP access technology is an access technology that complies with a 3GPP standard specification. For example, an access network device in the 5G system is referred to as a next generation Node Base station (next generation Node Base station, gNB) or a RAN device. The non-3GPP access technology may include an air interface technology represented by an access point (access point, AP) in wireless fidelity (wireless fidelity, Wi-Fi), worldwide interoperability microwave access (worldwide interoperability for microwave access, WiMAX), code division multiple access (code division multiple access, CDMA), and the like. The AN device may allow interconnection and interworking between the terminal device and a 3GPP core network by using the non-3GPP technology.

The AN device can be responsible for functions such as radio resource management, quality of service (quality of service, QoS) management, data compression and encryption, and the like on an air interface side. The AN device provides an access service for the terminal device, so as to complete forwarding of a control signal and user data between the terminal device and the core network.

For example, the AN device may include but is not limited to: a macro base station, a micro base station (also referred to as a small cell), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB (HNB)), a baseband unit (baseband unit, BBU), an AP, a wireless relay node, a wireless backhaul node, a transmission point (transmission point, TP), a transmission and a reception point (transmission and reception point, TRP), or the like in a Wi-Fi system, a gNB or a transmission point (TRP or TP) in a 5G (for example, NR) system, one antenna panel or a group of antenna panels (including a plurality of antenna panels) of a base station in the 5G system, or a network node, for example, a distributed unit (distributed unit, DU) or a base station in a next-generation communication 6G system, forming a gNB or a transmission point. A specific technology and a specific device form that are used by the AN device are not limited in this embodiment of this application.

3. The AMF is mainly used for access control, mobility management, attach and detach, and the like.

4. The SMF is mainly used for user plane network element selection, user plane network element redirection, terminal device Internet Protocol (Internet Protocol, IP) address allocation, and session management in a mobile network, for example, session establishment, modification, and release, and quality of service (quality of service, QoS) control.

5. The UPF is mainly used to receive and forward user plane data. For example, the UPF may receive user plane data from the DN, and send the user plane data to the terminal device via the AN device. The UPF may further receive user plane data from the terminal device via the AN device, and forward the user plane data to the DN. The UPF that is directly connected to the DN through an N6 interface in a session may be referred to as a protocol data unit (protocol data unit, PDU) session anchor (PDU session anchor, PSA).

6. The PCF is a unified policy framework mainly used to govern network behavior, and provides policy rule information and the like for a control plane network element (for example, an AMF, an SMF, and the like).

7. The AF is mainly used to provide a service for a 3GPP network, for example, interacting with a PCF to perform policy control, and the like.

8. The network slice selection function (network slice selection function, NSSF) is mainly used for network slice selection.

9. The UDM is mainly used to manage UE subscription data, including UE identifier storage and management, UE access authorization, and the like.

10. The DN is mainly used for an operator network that provides a data service for the UE, for example, the Internet (Internet), a third-party service network, an IP multi-media service (IP multi-media service, IMS) network, and the like.

11. The AUSF is mainly used for user authentication, and the like.

12. The NEF is mainly used for secure exposure of services and capabilities, and the like that are provided by a 3GPP network function.

13. The NRF is mainly used to store description information of network function entities and services provided by the network function entity.

In an example, FIG. 2 is a schematic diagram of another network architecture.

As shown in FIG. 2, the network architecture may be understood as a system architecture or a scenario in which an edge computing (edge computing) service is deployed in a 5G network architecture. As shown in FIG. 2, the network architecture may include but is not limited to: an NEF, a PCF, an AF, an SMF, an AMF, UE, a UPF, a DN, an AN, and an edge application server (edge application server, EAS).

The EAS may also be referred to as an edge application (server), an application instance, an edge application instance, a multi-access edge computing (multi-access edge computing, MEC) application (server), an EAS function, or the like. The EAS is deployed on a local DN (local DN). The network selects a UPF that is closer to the local DN to establish a transmission path for the UE, to ensure that the UE can normally access an edge service. The local DN may be identified by a data network access identifier (data network access identifier, DNAI), or the local DN may be identified by a data network name (data network name, DNN).

When the terminal device has service transmission, the terminal device may establish a plurality of PDU sessions (sessions) to a same DN or different DNs via an SMF. The SMF can control PDU data routing, so that the PDU session can have a plurality of N6 interfaces at the same time. A UPF connected to each N6 interface is referred to as a PSA. Each PAS provides a different path to the same DN. For different types of PDU sessions, the SMF may insert an uplink classifier (uplink classifier, UL CL) into a data transmission path of the PDU session. A function of the UL CL is provided by a UPF, to forward a data packet that meets a service filtering rule to a designated path. When a UL CL is inserted into a data channel of a PDU session, the PDU session may have a plurality of PDU session anchors, to provide a plurality of different paths to a same DN. In other words, the function of the UL CL may be transmitting uplink data to different PSAs, and combining downlink data to the UE. Alternatively, data corresponding to all PSAs may be aggregated to a common UPF, where the common UPF has a function of a branching point (branching point, BP). The branching point forwards uplink data to different PSAs in an uplink direction and combines downlink data from the PSAs in a downlink direction. In the system architecture shown in FIG. 2, the UPF (UL CL/BP) may represent a UPF that provides the function of the UL CL or a common UPF. To be specific, the UPF may transmit uplink data to different PSAs, for example, a UPF (PSA2) and a UPF (PSA1), and combine downlink data to the UE.

For descriptions of other network elements in FIG. 2, refer to the foregoing descriptions. Details are not described herein again.

In the network architecture shown in FIG. 1 or FIG. 2, network elements may communicate with each other via interfaces. For example, UE is connected to an AN device by using a radio resource control (radio resource control, RRC) protocol, and the UE communicates with the AN device via a Uu interface. Alternatively, reference may be made to the interfaces shown in FIG. 1 or FIG. 2, and details are not described herein again.

It should be understood that the network architecture shown above is merely an example for description, and a network architecture applicable to embodiments of this application is not limited thereto. Any network architecture that can implement functions of the foregoing network elements is applicable to embodiments of this application. In addition, the foregoing network architecture may further include more other network elements. This is not limited herein. For example, the architecture shown in FIG. 2 further includes an edge application server discovery function (edge application server discovery function, EASDF). The edge application server discovery function may also be referred to as, for example, an edge application (service) discovery function, an application instance discovery function, an edge application instance discovery function, an MEC application (server) discovery function, or the like. This is not limited.

It should be further understood that functions or network elements such as the AMF, the SMF, the UPF, the PCF, the UDM, the NSSF, the AUSF, and the like shown in FIG. 1 or FIG. 2 may be understood as network elements configured to implement different functions, for example, may be combined into a network slice as required. These network elements may be independent devices, or may be integrated into a same device to implement different functions, or may be a network element in a hardware device, or may be a software function running on dedicated hardware, or may be an instantiated virtualization function on a platform (for example, a cloud platform). A specific form of the network element is not limited in this application.

It should be further understood that the foregoing names are defined merely for distinguishing between different functions, and should not constitute any limitation on this application. This application does not exclude a possibility of using other names in a 6G network and another future network. For example, in the 6G network, some or all of the foregoing network elements may still use terms in 5G, and may alternatively use other names.

For ease of understanding of embodiments of this application, several basic concepts in embodiments of this application are briefly described. It should be understood that basic concepts described below are briefly described by using a basic concept specified in a current protocol as an example, but this is not limited to that embodiments of this application can be applied only to an existing system. Therefore, names that appear when a current existing system is used as an example for description are all functional descriptions, are not specifically limited, only represents a function, and may be correspondingly extended to another system, for example, 6G or a future communication system.

### 1. Mobile network roaming (roaming)

Using an operator A and an operator B as an example, roaming means that a mobile user belonging to the operator A accesses a network of the operator B. For the user, the network of the operator A may be considered as a home network (or referred to as a homeland network), and the network of the operator B may be considered as a visited network.

A cellular mobile communication network of a standard of an operator may be referred to as a public land mobile network (public land mobile network, PLMN). A subscribed PLMN (that is, the home network) is referred to as a home public land mobile network (public land mobile network, PLMN) (home PLMN, HPLMN), and a PLMN (that is, the visited network) to which a subscriber roams is referred to as a visited PLMN (visited PLMN, VPLMN).

In this application, for differentiation, an EASDF in the home network (that is, the HPLMN) is denoted as a home EASDF (home EASDF, H-EASDF), and an EASDF in the visited network (that is, the VPLMN) is denoted as a visited EASDF (visited EASDF, V-EASDF). An SMF in the home network is denoted as a home SMF (home SMF, H-SMF), and an SMF in the visited network is denoted as a visited SMF (visited SMF, V-SMF). A UPF in the home network is denoted as a home UPF (home UPF, H-UPF), and a UPF in the visited network is denoted as a visited UPF (visited UPF, V-UPF). In addition, for differentiation, a PSA in the home network is denoted as a home PSA (home PSA, H-PSA), and a PSA in the visited network is denoted as a visited PSA (visited PSA, V-PSA) (or denoted as a local PSA (local PSA, L-PSA)).

A roaming scenario may be classified into local breakout (local breakout, LBO) roaming and home routed (home routed, HR) roaming. A difference between the LBO roaming and the HR roaming mainly lies in whether a session needs to be connected to the UPF in the home network. The following briefly describes the two types of roaming.

### (1) HR roaming

In the HR roaming scenario, a session (for example, a PDU session) is connected to a UPF in the home network (that is, the H-UPF).

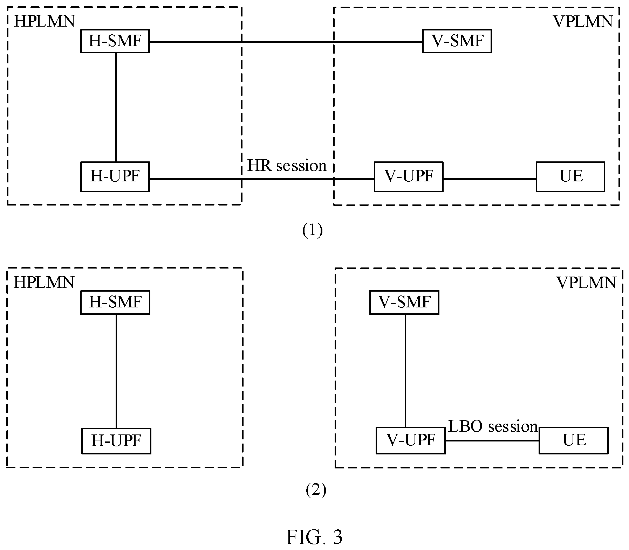

In an example, (1) in FIG. 3 is a schematic diagram of an HR roaming scenario. As shown in (1) in FIG. 3, an HR session (for example, an HR PDU session) is a session that is established when the user is located in the visited network and that is connected to the H-UPF. A traffic (traffic) flow carried in the HR session is sent from the UE to the H-UPF, and then sent to a receive end.

This application may be applied to an HR roaming scenario.

### (2) LBO roaming

In the LBO roaming scenario, a session (for example, a PDU session) is not connected to a UPF in the home network (that is, the H-UPF).

In an example, (2) in FIG. 3 is a schematic diagram of an LBO roaming scenario. As shown in (2) in FIG. 3, an LBO session (for example, an LBO PDU session) is a session that is established when the user is located in the visited network and that is connected to the V-UPF. A traffic flow carried in the LBO session is directly sent locally in the visited network (that is, the VPLMN), and does not need to be bypassed to the UPF in the home network (that is, the HPLMN) (that is, the H-UPF).

### 2. Service discovery of edge computing

In an edge computing deployment scenario, some services may be provided by a plurality of edge application servers EASs deployed at a network edge. The plurality of EASs may provide the same services and content, and most of the EASs have different IP addresses. In an EC scenario, when the UE accesses the service, the UE may request to access an available EAS that is close to the UE. In view of this, obtaining a proper IP address of the EAS is important.

In an example, the IP address of the EAS may be obtained by using a service discovery mechanism based on a domain name system (domain name system, DNS). Specifically, the IP address of the EAS may be implemented by using an edge service discovery mechanism, for example, by performing the following steps.
(1) When the UE needs to access an edge service, the UE initiates a DNS query (DNS query) message.
(2) The EASDF receives the DNS query message, and forwards the DNS query to the SMF.
(3) After receiving the DNS query, the SMF provides information capable reflecting a location of the UE to the EASDF, for example, an Edns-client-subnet option (Edns-client-subnet option, ECS option).
(4) The EASDF includes the ECS option to the DNS query message.
(5) The EASDF forwards the DNS query message including the ECS option to a DNS server (for example, a central DNS server or a local DNS server).
(6) The DNS server determines a current location of the UE based on the ECS option carried in the DNS query message, and then returns, to the UE, an EAS IP address close to the UE via a DNS response (DNS response).

It may be understood that the foregoing steps are merely examples for description, and are not limited herein.

Currently, for UE in HR roaming, in a PDU session establishment phase, only HPLMN-related information (for example, address information of an edge application server discovery network element in HPLMN) is provided for the UE, and a DNS query message sent by the UE cannot reach the edge application server discovery network element in the VPLMN. Consequently, an edge application server located in the VPLMN cannot be discovered for the UE. In addition, according to an existing manner, if the DNS query message sent by the UE carries a V-EASDF address, the DNS query message is still directly sent to the H-UPF through a tunnel between the H-UPF and the V-UPF, and then sent from the H-UPF to the V-EASDF. Therefore, a transmission distance is long, and a delay is high. In view of this, an existing edge service discovery mechanism cannot be applied to the HR roaming scenario.

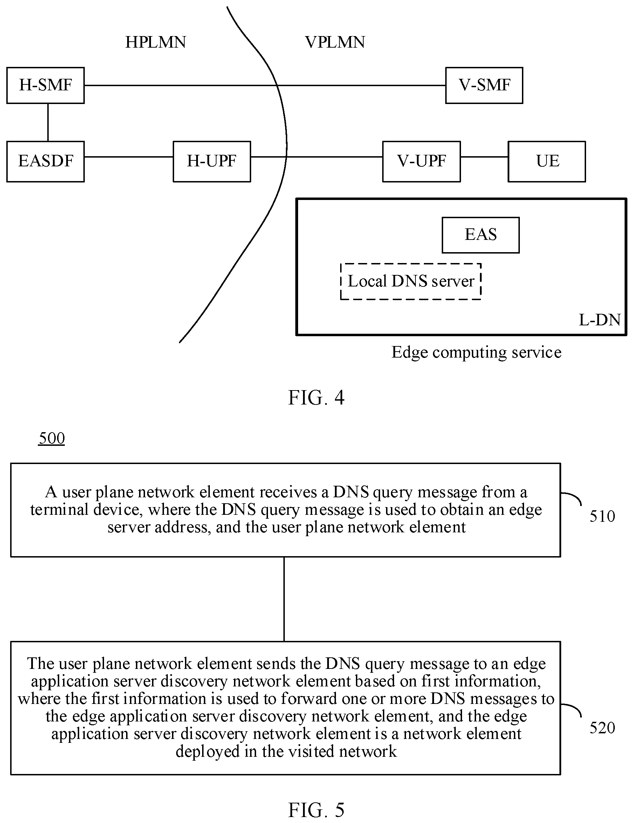

In view of this, this application provides a solution. A user plane network element in the VPLMN receives a DNS query message from a terminal device, and sends the DNS query message to the edge application server discovery network element in the VPLMN based on first information. The user plane network element in the VPLMN sends, based on the first information, the DNS query message from the terminal device to the edge application server discovery network element in the VPLMN, so that the edge application server in the VPLMN can be discovered for the terminal device, and an edge application service can be provided for the terminal device. Therefore, this application may be applied to resolve edge service discovery in a roaming scenario (for example, the HR roaming scenario). As shown in FIG. 4, if UE roams from the HPLMN to the VPLMN, by using the solutions provided in this application, an edge computing service in the VPLMN can be discovered for the UE.

It may be understood that, the term "and/or" in this specification is only an association relationship for describing associated objects, and represents that three relationships may exist, for example, A and/or B may represent the following three cases: A exists separately, both A and B exist, and B exists separately. In addition, the character "/" in this specification generally indicates an "or" relationship between the associated objects.

The communication method provided in embodiments of this application is described in detail below with reference to the accompanying drawings. The embodiments provided in this application may be applied to the network architecture shown in FIG. 1 or FIG. 2. This is not limited.

FIG. 5 is a schematic diagram of a communication method 500 according to an embodiment of this application. The method 500 may include the following steps.

510. A user plane network element receives a DNS query message from a terminal device, where the user plane network element is a network element deployed in a visited network.

The DNS query message may be specifically used to obtain an edge server address, for example, an address of an EAS.

520. The user plane network element sends the DNS query message to an edge application server discovery network element based on first information, where the first information is used to forward one or more DNS messages to the edge application server discovery network element, and the edge application server discovery network element is a network element deployed in the visited network.

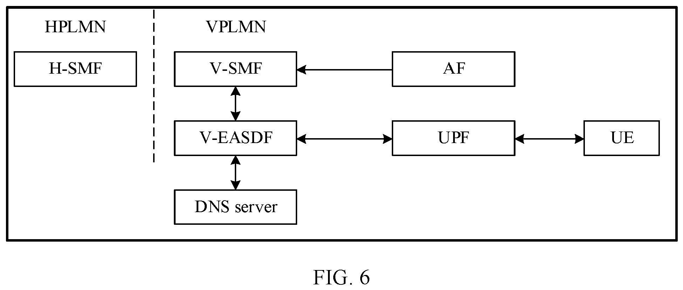

Based on the foregoing technical solution, after receiving the DNS query message from the terminal device for obtaining an edge server address, the user plane network element (for example, a V-UPF) deployed in the visited network (for example, a VPLMN) may forward, based on the first information, the DNS query message to the edge application server discovery network element (for example, a V-EASDF) deployed in the visited network, so that the edge application server discovery network element deployed in the visited network processes the DNS query message. The user plane network element deployed in the visited network sends, based on the first information, the DNS query message from the terminal device to the edge application server discovery network element in the VPLMN, so that an edge application server in the VPLMN can be discovered for the terminal device, and an edge application service can be provided for the terminal device. For example, if the terminal device roams to the visited network, by applying the solutions provided in this application, an edge computing service in the visited network can be discovered for the terminal device. As shown in FIG. 6, when the UE is located in the VPLMN, the V-UPF may intercept a DNS request for an edge service, and forward the DNS request to the V-EASDF for processing.

The user plane network element is, for example, a network element deployed in the VPLMN, for example, a network element with a user plane function. For example, the user plane network element is a V-UPF.

The edge application server discovery network element is a network element deployed in the VPLMN, for example, a network element configured to discover an edge server. For example, the edge application server discovery network element is a V-EASDF.

The first information indicates (or represents or means) to forward one or more DNS messages to the edge application server discovery network element. For example, after receiving a DNS query message from the terminal device, the V-UPF learns, based on the first information, that the DNS query message is to be forwarded to the V-EASDF. In this way, the V-UPF forwards the DNS query message to the V-EASDF for processing by the V-EASDF.

A specific name of the first information is not limited in this application. For example, "first information" in this application may be replaced with "forwarding rule", "forwarding policy", "handling rule", "handling policy", "service detection information or rule", or the like.

A form of the first information is not limited in this application. For example, the first information may be an information element, or may be a parameter, or may be in a tabular form. Descriptions are provided below with reference to content that may be included in the first information.

Optionally, the first information includes one or more of the following: a fully qualified domain name (full qualified domain name, FQDN) (or an FQDN range (range)) (for differentiation, referred to as a target FQDN), an application ID (application ID, AppID) (for differentiation, referred to as a target application identifier), an address of a target device, a DNS protocol port number, and a V-EASDF address.

The following mainly uses the FQDN as an example for description. It may be understood that an FQDN in the following examples may alternatively be replaced with an application identifier or an IP address.

### Example 1: The first information includes a target FQDN.

The target FQDN may include one or more FQDNs. The target FQDN may be used to match (or detect) a DNS message.

In a possible implementation, the first information includes two information elements, one information element indicates (or represents or means) to forward one or more DNS messages to the edge application server discovery network element, and the other information element includes the target FQDN. The user plane network element may learn, based on the first information, that a DNS query message that matches the target FQDN is to be forwarded to the edge application server discovery network element.

In another possible implementation, the first information includes the target FQDN, and the user plane network element determines, based on internal logic, to forward, to the edge application server discovery network element, a DNS query message that matches the target FQDN.

For example, based on Example 1, if an FQDN included in the DNS query message received by the user plane network element in step 510 belongs to the target FQDN, in step 520, the user plane network element sends the DNS query message to the edge application server discovery network element.

### Example 2: The first information includes a target application identifier.

The target application identifier may include one or more application identifiers. The target application identifier may be used to detect (or match or identify) a DNS message.

In a possible implementation, the first information includes two information elements, one information element indicates (or represents or means) to forward one or more DNS messages to the edge application server discovery network element, and the other information element includes the target application identifier. The user plane network element may learn, based on the first information, that a DNS query message that matches the target application identifier is to be forwarded to the edge application server discovery network element.

In another possible implementation, the first information includes the target application identifier, and the user plane network element determines, based on internal logic, to forward, to the edge application server discovery network element, a DNS query message that matches the target application identifier.

For example, based on Example 2, if an application identifier included in the DNS query message received by the user plane network element in step 510 belongs to the target application identifier, in step 520, the user plane network element sends the DNS query message to the edge application server discovery network element.

### Example 3: The first information includes an address of a target device.

The address of the target device is a destination address of the one or more DNS messages, and the target device is a device deployed in a home network. For example, the address of the target device may be, for example, a DNS server address (for example, an H-DNS server address configured in a PDU session), or may be an EASDF address (for example, an H-EASDF address configured in the PDU session), or may be another device deployed in the home network. This is not limited.

The following uses the DNS server address as an example for description. It may be understood that a DNS server address of descriptions below may alternatively be replaced with an EASDF address (that is, an H-EASDF address). Details are not described herein again.

The DNS server address is a destination address of the one or more DNS messages. For example, the DNS server address is an H-DNS server address. The DNS server address can be used to match (or detect) a DNS message.

In a possible implementation, the first information includes two information elements, one information element indicates (or represents or means) to forward one or more DNS messages to the edge application server discovery network element, and the other information element includes the DNS server address. The user plane network element may learn, based on the first information, that a DNS query message that matches the DNS server address is to be forwarded to the edge application server discovery network element.

In another possible implementation, the first information includes the DNS server address, and the user plane network element determines, based on internal logic, to forward, to the edge application server discovery network element, a DNS query message that matches the DNS server address.

For example, based on Example 3, if a destination address of the DNS query message received by the user plane network element in step 510 is the DNS server address, in step 520, the user plane network element sends the DNS query message to the edge application server discovery network element.

### Example 4: The first information includes a DNS protocol port number.

The DNS protocol port number is a port number corresponding to the one or more DNS messages. The DNS protocol port number can be used to match (or detect) a DNS message.

In a possible implementation, the first information includes two information elements, one information element indicates (or represents or means) to forward one or more DNS messages to the edge application server discovery network element, and the other information element includes the DNS protocol port number. The user plane network element may learn, based on the first information, that a DNS query message that matches the DNS protocol port number is to be forwarded to the edge application server discovery network element.

In another possible implementation, the first information includes the DNS protocol port number, and the user plane network element determines, based on internal logic, to forward, to the edge application server discovery network element, a DNS query message that matches the DNS protocol port number.

For example, based on Example 4, if a port number corresponding to the DNS query message received by the user plane network element in step 510 is the DNS protocol port number, in step 520, the user plane network element sends the DNS query message to the edge application server discovery network element.

### Example 5: The first information includes a V-EASDF address.

The V-EASDF address may be used to match (or detect) a DNS message, and/or the V-EASDF address may be used to determine an address of the edge application server discovery network element to which the user plane network element sends the DNS query message.

For example, the V-EASDF address may be used to match (or detect) a DNS message, or the V-EASDF address may be used to determine an address of the edge application server discovery network element to which the user plane network element sends the DNS query message.

In a possible implementation, the first information includes two information elements, one information element indicates (or represents or means) to forward one or more DNS messages to the edge application server discovery network element, and the other information element includes the V-EASDF address. The user plane network element may learn, based on the first information, that a DNS query message that matches the V-EASDF address is to be forwarded to the edge application server discovery network element, and/or the user plane network element may learn, based on the first information, that the DNS query message is forwarded to an edge application server discovery network element corresponding to the V-EASDF address.

In another possible implementation, the first information includes the V-EASDF address, and the user plane network element determines, based on internal logic, to forward a DNS query message that matches the V-EASDF address to the edge application server discovery network element, and/or the user plane network element determines, based on the internal logic, to forward the DNS query message to an edge application server discovery network element corresponding to the V-EASDF address.

In another example, the V-EASDF address may be used to match (or detect) a DNS message, and the V-EASDF address may be used to determine an address of the edge application server discovery network element to which the user plane network element sends the DNS query message. For differentiation, a V-EASDF address used to match (or detect) a DNS message is denoted as a V-EASDF address #1, and a V-EASDF address used to determine the edge application server discovery network element to which the user plane network element sends the DNS query message is denoted as a V-EASDF address #2. It may be understood that the V-EASDF address #1 and the V-EASDF address #2 may be the same, or may be different. This is not limited.

In a possible implementation, the first information includes three information elements, one information element indicates (or represents or means) to forward one or more DNS messages to the edge application server discovery network element, another information element includes the V-EASDF address #1, and still another information element includes the V-EASDF address #2. The user plane network element may learn, based on the first information, that a DNS query message that matches the V-EASDF address #1 is forwarded to an edge application server discovery network element corresponding to the V-EASDF address #2.

In another possible implementation, the first information includes two information elements, one information element includes the V-EASDF address #1, and the other information element includes the V-EASDF address #2. The user plane network element determines, based on internal logic, to forward, to an edge application server discovery network element corresponding to the V-EASDF address #2, a DNS query message that matches the V-EASDF address #1.

For example, based on Example 5, if a destination address of the DNS query message received by the user plane network element in step 510 is the V-EASDF address, in step 520, the user plane network element sends the DNS query message to an edge application server discovery network element corresponding to the V-EASDF address. Alternatively, based on Example 5, if the user plane network element receives the DNS query message in step 510, in step 520, the user plane network element sends the DNS query message to an edge application server discovery network element corresponding to the V-EASDF address.

It may be understood that the foregoing examples are merely examples for description, and this application is not limited thereto. In addition, the foregoing separately describes the information. It may be understood that the first information may include a plurality of pieces of information. For example, the first information includes a target FQDN and a V-EASDF address. The target FQDN may be used to match (or detect) a DNS message, and the V-EASDF address may be used to determine an address of the edge application server discovery network element to which the user plane network element sends the DNS query message, and the like.

In a possible design, the first information includes two types of parameters, which are respectively denoted as a first parameter and a second parameter for differentiation.

The first parameter may be used to detect (or match or identify) one or more DNS messages. The user plane network element may learn, based on the first parameter, whether to forward, to the edge application server discovery network element, a DNS query message that matches the first parameter. For example, the first parameter may be referred to as a service detection (or matching or identification) parameter (or service detection information), or may be referred to as a message detection (or matching or identification) parameter (or message detection information), or the like. A name of the first parameter does not constitute any limitation on this application.

The first parameter may include one or more parameters (one or more pieces of information). In an example, the first parameter includes one or more of the following: a target FQDN, a target application identifier, an address of a target device, a DNS protocol port number, and a V-EASDF address. For use of each parameter, refer to the foregoing descriptions. A difference lies in that in this design, the V-EASDF address is used to match (or detect) a DNS message. Details are not described herein again.

The second parameter is used to determine an edge application server discovery network element. The user plane network element may learn, based on the second parameter, that the DNS query message is to be forwarded to the edge application server discovery network element. For example, the second parameter may be referred to as an address parameter (or address information), or may be referred to as an address determining (or matching or identification) parameter (or address determining information), or the like. A name of the second parameter does not constitute any limitation on this application.

The second parameter may include one or more parameters (or one or more pieces of information). For example, the second parameter includes a V-EASDF address.

In a possible implementation, the first information includes three information elements, one information element indicates (or represents or means) to forward one or more DNS messages to the edge application server discovery network element, another information element includes the first parameter, and still another information element includes the second parameter. The user plane network element may learn, based on the first information, that a DNS query message that matches the first parameter is to be forwarded to the V-EASDF.

In another possible implementation, the first information includes two information elements, one information element includes the first parameter, and the other information element includes the second parameter. The user plane network element determines, based on internal logic, to forward, to the V-EASDF, a DNS query message that matches the first parameter.

The first information is described above by using examples. It may be understood that any form in which a function of the first information can be implemented is applicable to this application.

Optionally, the method 500 further includes: The user plane network element obtains first information.

**In** a possible implementation, the user plane network element receives first information from a session management network element.

The session management network element is a network element deployed in the VPLMN, for example, a session management network element. For example, the session management network element is a V-SMF. For example, the user plane network element is a V-UPF, and the session management network element is a V-SMF. The V-SMF sends first information to the V-UPF. Correspondingly, the V-UPF receives the first information from the V-SMF.

The first possible case is used as an example. In this case, the user plane network element may receive, via one piece of signaling, one or more of the following from the session management network element: a target FQDN, a target application identifier, an address of a target device, a DNS protocol port number, and a V-EASDF address; or the user plane network element may receive, via a plurality of pieces of signaling, a plurality of the following from the session management network element: a target FQDN, a target application identifier, an address of a target device, a DNS protocol port number, and a V-EASDF address.

The second possible case is used as an example. In this case, the user plane network element may receive a first parameter and a second parameter from the session management network element via one piece of signaling; or the user plane network element may receive a first parameter and a second parameter from the session management network element via two pieces of signaling, that is, receive the first parameter via one piece of signaling, and receive the second parameter via another piece of signaling.

Optionally, the session management network element determines the first information. For example, the session management network element may determine the first information based on EAS deployment (deployment) information. The EAS deployment information includes information about deployment of an EAS in an edge network. In an example, the EAS deployment information includes an FQDN (or an FQDN range) corresponding to a service deployed in the VPLMN, and an EAS IP address. For example, the session management network element determines the first information based on the FQDN corresponding to the service deployed in the VPLMN. The session management network element obtains, from the EAS deployment information, FQDN information used by an edge service, and then includes the FQDN information in the first information, that is, the first information carries the FQDN, or associates the first information with the FQDN.

Optionally, the session management network element may determine the first information for an HR session. For example, if the session management network element determines that the session is an HR session, the session management network element determines the first information. A specific manner in which the session management network element determines that the session is an HR session is not limited. For example, in a session establishment procedure, the session management network element may learn that the established session is an HR session.

It should be understood that the foregoing example is an example for description, and this application is not limited thereto. For example, the user plane network element locally configures the first information. For example, the user plane network element locally stores the first information, and the user plane network element may directly read the first information after receiving the DNS query message from the terminal device.

Optionally, step 520 in which the user plane network element sends the DNS query message to an edge application server discovery network element includes at least the following several solutions.

Solution 1: The user plane network element directly forwards the DNS query message to the edge application server discovery network element.

Example 1: The UE sends a DNS query message to the V-UPF. A destination address of the DNS query message is the address of the target device (for example, the H-DNS server address, the H-EASDF address, or the like). After receiving the DNS query message, the V-UPF forwards the complete DNS query message to the V-EASDF through a tunnel (tunnel), and the V-EASDF processes the DNS query message. An address of a receive end of the tunnel is the V-EASDF address.

Example 2: The UE sends a DNS query message to the V-UPF, where a destination address of the DNS query message is the V-EASDF address. After receiving the DNS query message, the V-UPF directly forwards the DNS query message to the V-EASDF, and the V-EASDF processes the DNS query message.

Solution 2: After modifying (or replacing) an address, the user plane network element forwards the DNS query message to the edge application server discovery network element.

For example, the UE sends a DNS query message to the V-UPF, where a destination address of the DNS query message is the address of the target device (for example, the H-DNS server address, the H-EASDF address, or the like). After receiving the DNS query message, the V-UPF replaces the destination address of the DNS query message with the V-EASDF address, and forwards a DNS query message whose destination address is replaced with the V-EASDF address to the V-EASDF for processing.

In a possible manner, the first information is further used to indicate (or represent or mean) to replace the destination address of the DNS query message with the V-EASDF address. The user plane network element learns, based on the first information, that the destination address of the DNS query message is replaced with the V-EASDF address; and the user plane network element sends, to the V-EASDF, a DNS query message whose destination address is replaced with the V-EASDF address. For example, the first information may indicate, by using one or more bits, to replace the destination address of the DNS query message with the V-EASDF address. For example, it is assumed that one bit is used to indicate whether to replace the destination address of the DNS query message with the V-EASDF address. If the bit is set to "0", it indicates that the first information indicates to replace the destination address of the DNS query message with the V-EASDF address. If the bit is set to "1", it indicates that the first information does not indicate to replace the destination address of the DNS query message with the V-EASDF address. Alternatively, the first information may carry an address (for example, the V-EASDF address) or a parameter to indicate to replace the destination address of the DNS query message with the V-EASDF address. For example, the user plane network element receives first information from the session management network element, and the first information carries an address (for example, the V-EASDF address) or a parameter. In this case, the user plane network element sends, to the V-EASDF, a DNS query message whose destination address is replaced with the V-EASDF address.

In another possible manner, the user plane network element learns, based on a local configuration, that the destination address of the DNS query message is replaced with the V-EASDF address; and the user plane network element sends, to the V-EASDF, a DNS query message whose destination address is replaced with the V-EASDF address.

In still another possible manner, the user plane network element receives information #1 from the session management network element. The information #1 is used to notify (or indicate, represent, or mean) to replace the destination address of the DNS query message with the V-EASDF address. The user plane network element learns, based on the information #1, that the destination address of the DNS query message is replaced with the V-EASDF address. The user plane network element sends, to the V-EASDF, a DNS query message whose destination address is replaced with the V-EASDF address. A form of the information #1 is not limited in this application. For example, the information #1 may be an information element. For example, the information #1 may be implemented by using one or more bits. For example, it is assumed that one bit is used to indicate whether to replace the destination address of the DNS query message with the V-EASDF address. If the bit is set to "0", it indicates that the destination address of the DNS query message is replaced with the V-EASDF address. If the bit is set to "1", it indicates that the destination address of the DNS query message does not need to be replaced with the V-EASDF address. In another example, the information #1 may be an address (for example, the V-EASDF address) or a parameter. For example, if the user plane network element receives the information #1 from the session management network element, the user plane network element sends, to the V-EASDF, a DNS query message whose destination address is replaced (or modified) with the V-EASDF address.

The foregoing several manners are examples for description, and this application is not limited thereto.

Optionally, the method 500 further includes: The user plane network element receives a DNS response message from the edge application server discovery network element, and correspondingly, the edge application server discovery network element sends the DNS response message to the user plane network element. The following describes two possible cases.

Case 1: The V-EASDF sends a DNS response message to the user plane network element, and a source address of the DNS response message is an H-DNS server address.

Optionally, the V-EASDF stores the destination address of the DNS query message, that is, the H-DNS server address.

Example 1 in Solution 1 is used as an example. The V-EASDF receives a DNS query message from the V-UPF, and records a destination address of the DNS query message, that is, an H-DNS server address. The V-EASDF generates a DNS response message by using the H-DNS server address, that is, uses the H-DNS server address as a source address of the DNS response message. The V-EASDF sends the DNS response message to the UE.

Solution 2 is used as an example. The V-EASDF receives a DNS query message from the V-UPF, obtains an H-DNS server address from another network element (for example, the V-SMF), and uses the H-DNS server address as a source address of the DNS response message.

Case 2: The V-EASDF sends a DNS response message to the user plane network element, where a source address of the DNS response message is a V-EASDF address, and the user plane network element replaces the V-EASDF address with an address of a first device.

The address of the first device is the destination address of the DNS query message. The first device is a device deployed in a home network, for example, a DNS server, an EASDF, or the like. For example, the address of the first device may be, for example, a DNS server address (for example, an H-DNS server address configured in a PDU session), or may be an EASDF address (for example, an H-EASDF address configured in the PDU session), or may be another device deployed in the home network. This is not limited. The target device includes the first device.

The following uses an example in which the address of the first device is an H-DNS server address for description. It may be understood that, the H-DNS server address of the following may alternatively be replaced with the EASDF address (that is, the H-EASDF address), which is not repeated below.

Solution 2 is used as an example. The V-EASDF generates a DNS response message by using an IP address of the V-EASDF, and sends the DNS response message to the user plane network element. After receiving the DNS response message from the V-EASDF, the user plane network element replaces the V-EASDF address with the H-DNS server address.

In a possible manner, the first information is further used to indicate (or represent or mean) to replace a source address of the DNS response message with the H-DNS server address. The user plane network element learns, based on the first information, that the source address of the DNS response message is replaced with the H-DNS server address; and the user plane network element sends, to the UE, a DNS response message whose source address is replaced with the H-DNS server address. For example, the first information may indicate, by using one or more bits, to replace the source address of the DNS response message with the H-DNS server address. For example, it is assumed that one bit is used to indicate whether to replace the source address of the DNS response message with the H-DNS server address. If the bit is set to "0", it indicates that the first information indicates to replace the source address of the DNS response message with the H-DNS server address. If the bit is set to "1", it indicates that the first information does not indicate to replace the source address of the DNS response message with the H-DNS server address. Alternatively, the first information may carry an address (for example, the H-DNS server address) or a parameter to indicate to replace the source address of the DNS response message with the H-DNS server address. For example, the user plane network element receives first information from the session management network element, and the first information carries an H-DNS server address. After receiving the DNS response message from the V-EASDF, the user plane network element replaces the source address of the DNS response message with the H-DNS server address, and sends, to the UE, a DNS response message whose source address is replaced with the H-DNS server address.

In another possible manner, the user plane network element learns, based on a local configuration, that the source address of the DNS response message is replaced with the H-DNS server address. After receiving the DNS response message from the V-EASDF, the user plane network element replaces the source address of the DNS response message with the H-DNS server address, and sends, to the UE, a DNS response message whose source address is replaced with the H-DNS server address.

In still another possible manner, the user plane network element receives information #2 from the session management network element, where the information #2 is used to notify (or indicate, or represent, or mean) to replace a source address of the DNS response message with the H-DNS server address. The user plane network element learns, based on the information #2, that the source address of the DNS response message is replaced with the H-DNS server address; and the user plane network element sends, to the UE, a DNS response message whose source address is replaced with the H-DNS server address. A form of the information #2 is not limited in this application. For example, the information #2 may be an information element. For example, the information #2 may be implemented by using one or more bits. For example, it is assumed that one bit is used to indicate whether to replace the source address of the DNS response message with the H-DNS server address. If the bit is set to "0", it indicates that the source address of the DNS response message is replaced with the H-DNS server address. If the bit is set to "1", it indicates that the source address of the DNS response message does not need to be replaced with the H-DNS server address. In another example, the information #1 may be an address (for example, the H-DNS server address) or a parameter. For example, if the user plane network element receives the information #1 from the session management network element, after receiving the DNS response message from the V-EASDF, the user plane network element replaces the source address of the DNS response message with the H-DNS server address, and sends, to the UE, a DNS response message whose source address is replaced with the H-DNS server address.

The foregoing several manners are examples for description, and this application is not limited thereto.

It may be understood that the foregoing two cases are examples for description, and this application is not limited thereto. A solution in which a source address of a DNS response message sent by the user plane network element to the UE is an H-DNS server address is applicable to this application.

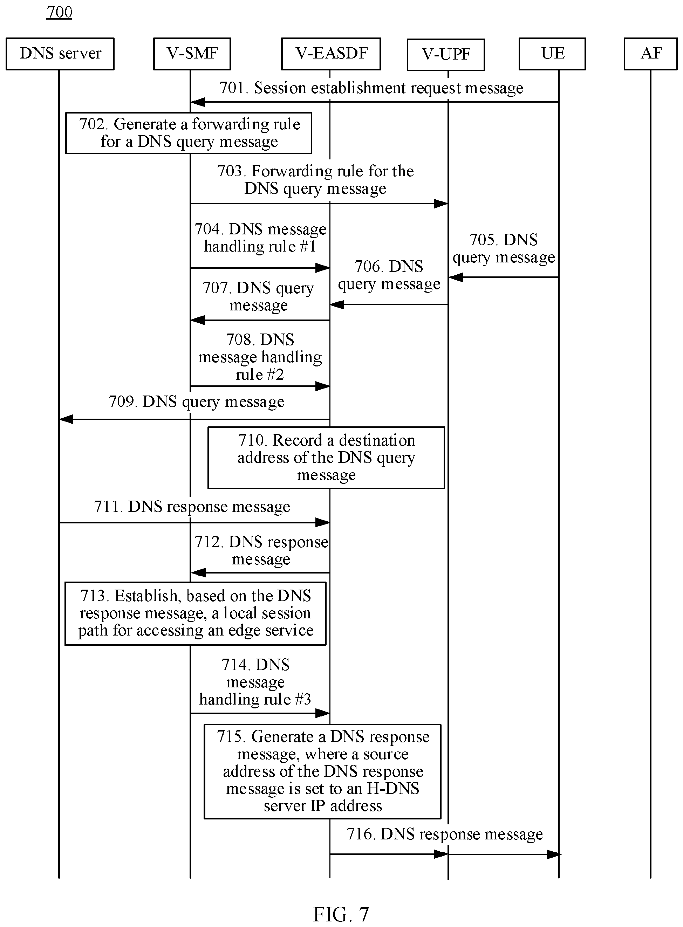

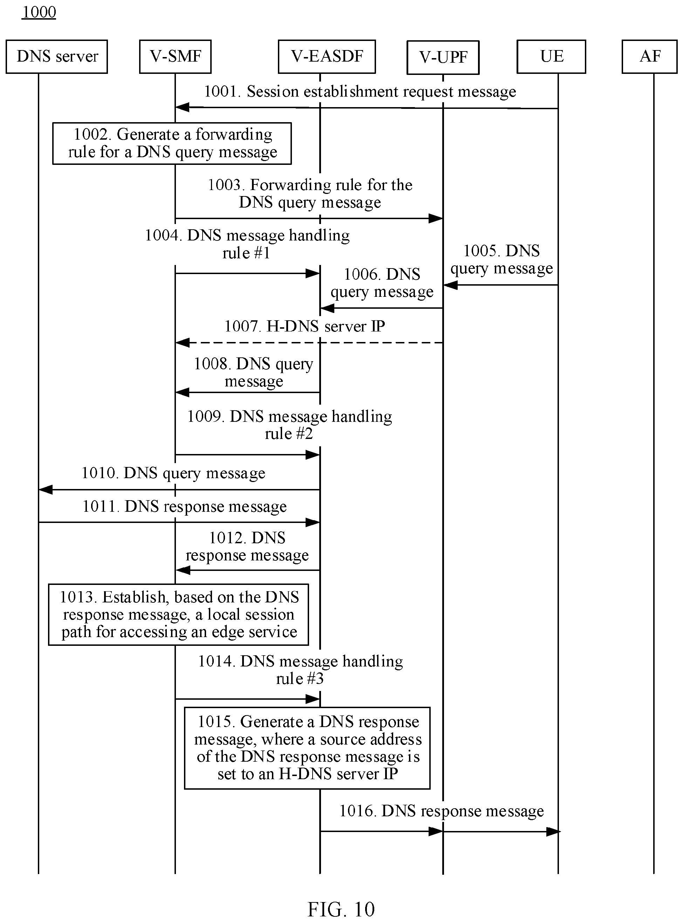

For ease of understanding, the following describes embodiments of this application by using an example with reference to FIG. 7 and FIG. 10. In the following example, it is assumed that the user plane network element is a V-UPF, the session management network element is a V-SMF, the first information is a forwarding rule, and the target device is an H-DNS server. For details about involved steps, refer to the foregoing descriptions.

FIG. 7 is a schematic flowchart of a communication method 700 according to an embodiment of this application. The method 700 may include the following steps.

701. UE sends a session establishment request message to a V-SMF.

**In** an HR roaming scenario, the UE may initiate an HR session establishment procedure. For example, the UE sends the session establishment request message to the V-SMF. For example, the UE may send the session establishment request message to the V-SMF by using an AMF. For a specific session establishment procedure, refer to conventional technologies or a subsequent session establishment manner. This is not limited herein.

702. The V-SMF generates a forwarding rule for a DNS query message.

The forwarding rule (that is, the first information in the method 500) may also be referred to as a data plane forwarding rule, and may be used to process a specific DNS query message, for example, forward the specific DNS query message to a V-EASDF. In an example, the specific DNS query message may be identified by, for example, one or more of a target FQDN, a target application identifier, an H-DNS server IP address, and a DNS protocol port number. For details, refer to Example 1 to Example 5 in the first possible case in the method 300.

For example, that the V-SMF generates a forwarding rule for a DNS query message may include: The V-SMF generates the forwarding rule for the DNS query message based on EAS deployment information or with reference to some other policy information.

A condition for triggering the V-SMF to generate the forwarding rule for the DNS query message is not limited. In a possible case, when determining that the session is an HR session, the V-SMF generates the forwarding rule for the DNS query message. In an example, after receiving the session establishment request message (for example, an HR session establishment request message), the V-SMF generates the forwarding rule for the DNS query message. In this example, it is assumed that the UE initiates the HR session establishment procedure. If the V-SMF receives the session establishment request message, the V-SMF generates the forwarding rule for the DNS query message. The session establishment request message may be, for example, an Nsmf_PDUSession_CreateSMContext Request (Nsmf_PDUSession_CreateSMContext Request) message sent by the AMF to the V-SMF. This is not limited in this application.

For the forwarding rule, refer to the foregoing description of the first information. Details are not described herein again.

703. The V-SMF sends the forwarding rule for the DNS query message to a V-UPF.

For example, the forwarding rule for the DNS query message may indicate the V-UPF to forward a specific DNS query message to the V-EASDF.

Optionally, the forwarding rule for the DNS query message includes one or more pieces of the following information: a target FQDN, a target application identifier, an H-DNS server IP address, a DNS protocol port number, and a V-EASDF IP address.

The target FQDN and the target application identifier are used to perform matching on the DNS query message. For example, if the forwarding rule for the DNS query message includes the target FQDN, the V-UPF forwards a DNS query that matches the target FQDN. In another example, if the forwarding rule for the DNS query message includes the target application identifier, the V-UPF forwards a DNS query that matches the target application identifier.

The H-DNS server IP identifies all DNS query messages sent to the H-DNS server. For example, if the forwarding rule for the DNS query message includes the H-DNS server IP address, after the V-UPF receives a DNS query message, if a destination address of the DNS query message is the H-DNS server IP address, the V-UPF forwards the DNS query message to the V-EASDF.

The DNS protocol port number is used by the V-UPF to identify a DNS protocol message.

The V-EASDF IP address is an address where the V-UPF forwards the specific DNS query message to the V-EASDF.

For use of the foregoing information, refer to the two possible cases of the first information in the method 5. Details are not described herein again.

704. The V-SMF sends a DNS message handling rule (DNS message handling rule) #1 to the V-EASDF.

Optionally, an AF sends EAS deployment information to the V-SMF. After receiving the EAS deployment information provided by the AF, the V-SMF may send the DNS message handling rule #1 to the V-EASDF based on the EAS deployment information or with reference to some other policy information.

The EAS deployment information includes information about deployment of an EAS in an edge network. In an example, the EAS deployment information includes an FQDN (or an FQDN range (range)) corresponding to a service deployed in a VPLMN, and an EAS IP address.

The DNS message handling rule #1 may be used to process the DNS query message. In an example, the DNS message handling rule #1 includes two parts of information: 1) information used for matching a DNS query message, for example, referred to as detection information, where if the DNS query message matches the detection information, it is considered that the handling rule is applicable to a corresponding DNS query message; 2) a handling action on a DNS query message, where when the matching succeeds, the V-EASDF performs a corresponding action, for example, the V-EASDF reports the DNS query message to the V-SMF.

It may be understood that this application is mainly described by using an example in which the AF sends the EAS deployment information to the V-SMF. This application is not limited thereto. For example, the V-SMF locally configures the EAS deployment information.

It is to be noted that there is no strict sequence between step 701 to step 704.

705. The UE sends a DNS query message to the V-UPF.

A source address of the DNS query message is a UE IP address, and a destination address is an H-DNS server IP address.

706. The V-UPF forwards the DNS query message to the V-EASDF.

The V-UPF processes the DNS query message based on the forwarding rule received in step 703. For example, the forwarding rule indicates the V-UPF to forward a specific DNS query message (for example, a DNS query message sent to the H-DNS server, a DNS query message that matches the target FQDN, a DNS query message that matches the target application identifier, or the like) to the V-EASDF. For example, the V-UPF forwards the DNS query message to the V-EASDF based on the destination address of the DNS query message, that is, the H-DNS server IP address.

In the method 700, the V-UPF does not need to modify the destination address of the DNS query message, and may forward the complete DNS query message to the V-EASDF. For example, the V-UPF forwards the DNS query message to the V-EASDF through a tunnel (for example, an IP-in-IP tunnel), and a destination address of the tunnel is a V-EASDF address.

707. The V-EASDF forwards the DNS query message to the V-SMF.

The V-EASDF processes the DNS query message based on the DNS message handling rule #1 received in step 702. For example, the DNS message handling rule #1 indicates the V-EASDF to report the DNS query message to the V-SMF. Therefore, the V-EASDF forwards the DNS query message to the V-SMF.

708. The V-SMF sends a DNS message handling rule #2 to the V-EASDF.

In response to step 707, the V-SMF may send a new DNS message handling rule to the V-EASDF, and the new DNS message handling rule is denoted as the DNS message handling rule #2 for differentiation. The DNS message handling rule #2 indicates a manner in which the V-EASDF further processes the DNS query message.

709. The V-EASDF sends the DNS query message to a DNS server.

After receiving the DNS query message, the DNS server starts a DNS query process.

710. The V-EASDF records the destination address of the DNS query message.

Optionally, if the destination address of the DNS query message is inconsistent with an address of the V-EASDF, the V-EASDF records the destination address of the DNS query message, that is, the destination address of the DNS query message is the H-DNS server IP address.

711. The V-EASDF receives the DNS response message from the DNS server.

712. The V-EASDF sends the DNS response message to the V-SMF.

The V-EASDF forwards the DNS response message received in step 711 to the V-SMF.

713. The V-SMF establishes, based on the DNS response message, a local session path for accessing an edge service.

714. The V-SMF sends a DNS message handling rule #3 to the V-EASDF.

The DNS message handling rule #3 may be used to handle the DNS response message. In an example, the DNS message handling rule #3 indicates to set the source address of the DNS response message to the H-DNS server IP address. Optionally, the V-SMF sends the H-DNS server IP address to the V-EASDF. For example, the DNS message handling rule #3 carries the H-DNS server IP address.

715. The V-EASDF generates a DNS response message, where a source address of the DNS response message is set to the H-DNS server IP address.

The V-EASDF can obtain the H-DNS server IP address in any of the following manners.

In a possible implementation, the V-EASDF receives the H-DNS server IP address from the V-SMF. For example, in step 714, the V-SMF sends the H-DNS server IP address to the V-EASDF.

In another possible implementation, the V-EASDF extracts the destination address of the DNS query message, that is, the H-DNS server IP address. For example, after receiving the DNS query message in step 707, the V-EASDF may extract the destination address of the DNS query message.

716. The V-EASDF sends a DNS response message to the UE.

The DNS response message is the DNS response message generated by the V-EASDF in step 715.

As shown in FIG. 7, the V-EASDF may send the DNS response message to the UE by using the V-UPF.

Based on the method 700, the V-UPF does not need to modify the destination address of the DNS query message, and may forward the complete DNS query message to the V-EASDF. In addition, the V-EASDF may further extract an original destination address of the DNS query message, and use the address when generating the DNS response message. According to the method, an edge service discovery mechanism for an HR session can be implemented, that is, an edge service located in a visited network is discovered for UE of the HR session, so that the UE can access the edge service deployed in the VPLMN when establishing the HR session.

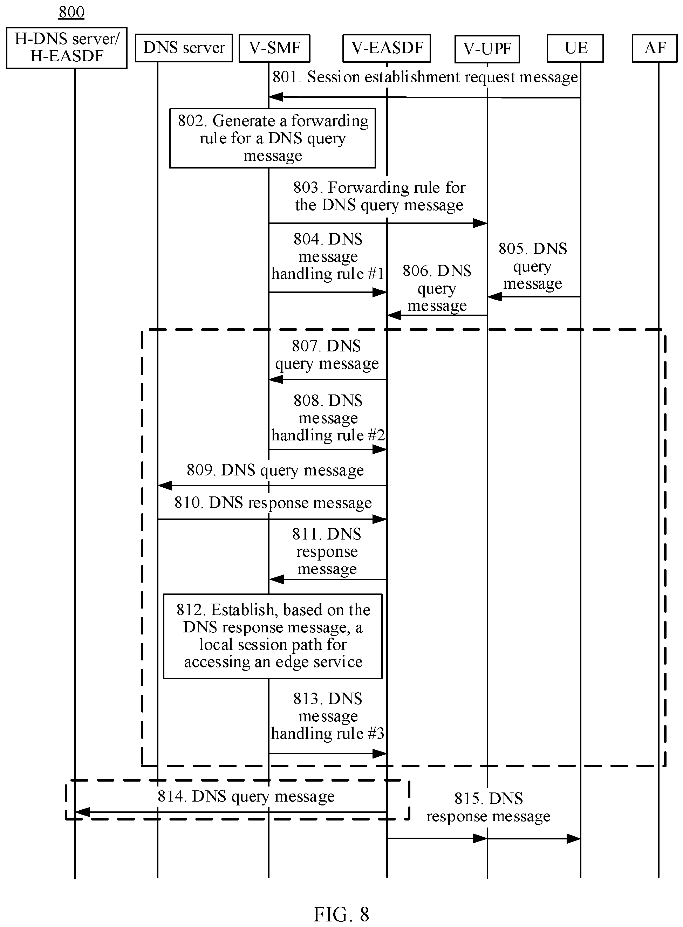

FIG. 8 is a schematic flowchart of another communication method 800 according to an embodiment of this application. The method 800 may include the following steps.

801. UE sends a session establishment request message to a V-SMF.

Step 801 is similar to step 701, and details are not described herein again.

802. The V-SMF generates a forwarding rule for a DNS query message.

The forwarding rule may also be referred to as a data plane forwarding rule, and may be used to process a specific DNS query message, for example, forward the specific DNS query message to a V-EASDF. In an example, the specific DNS query message may be identified by, for example, one or more of a target FQDN, a target application identifier, a DNS protocol port number, and a V-EASDF IP address. For details, refer to Example 1 to Example 5 in the first possible case in the method 300.

For example, that the V-SMF generates a forwarding rule for a DNS query message may include: The V-SMF generates the forwarding rule for the DNS query message based on EAS deployment information or with reference to some other policy information.

A condition for triggering the V-SMF to generate the forwarding rule for the DNS query message is not limited. In a possible case, when determining that the session is an HR session, the V-SMF generates the forwarding rule for the DNS query message. For details, refer to related descriptions in step 702. Details are not described herein again.

803. The V-SMF sends the forwarding rule for the DNS query message to a V-UPF.

For example, the data plane forwarding rule for the DNS query message may indicate the V-UPF to forward a specific DNS query message to the V-EASDF. In an example, in the method 800, the specific DNS query message may be, for example, a DNS query message sent to the V-EASDF.

Optionally, the forwarding rule for the DNS query message includes one or more of the following: a V-EASDF IP address and a DNS protocol port number.

The V-EASDF IP address identifies a DNS query message sent to the V-EASDF IP address. For example, if the forwarding rule for the DNS query message includes the V-EASDF IP address, after the V-UPF receives a DNS query message, if a destination address of the DNS query message is the V-EASDF IP address, the V-UPF forwards the DNS query message to the V-EASDF.

The DNS protocol port number is used by the V-UPF to identify a DNS protocol message.

804. The V-SMF sends a DNS message handling rule #1 to the V-EASDF.

Step 804 is substantially similar to step 704, and a difference lies in that in step 804, the DNS message handling rule #1 may further include an address of the H-DNS server. The address of the H-DNS server is used to directly send a DNS message that does not match the DNS message handling rule #1 to the H-DNS server for processing.

It is to be noted that there is no strict sequence between step 801 to step 804.

805. The UE sends a DNS query message to the V-UPF.

A source address of the DNS query message is the UE IP address, and a destination address is the V-EASDF IP address.

In the method 800, the UE may directly use the V-EASDF IP address as the destination address of the DNS query message.

806. The V-UPF forwards the DNS query message to the V-EASDF.

The V-UPF processes the DNS query message based on the forwarding rule received in step 803. For example, the forwarding rule indicates the V-UPF to forward a specific DNS query message to the V-EASDF. The V-UPF forwards the DNS query message to the V-EASDF because the destination address of the DNS query message is the V-EASDF IP address.

In a possible case, if the destination address of the DNS query message is the V-EASDF IP address, the V-EASDF processes the DNS query message. For example, steps 807 to 813 may be performed.

In another possible case, if the destination address of the DNS query message is the H-DNS server IP address, the H-DNS server processes the DNS query message. For example, step 814 may be performed.

807. The V-EASDF forwards the DNS query message to the V-SMF.

808. The V-SMF sends a DNS message handling rule #2 to the V-EASDF.

809. The V-EASDF sends the DNS query to a DNS server.

Steps 807 to 809 are similar to steps 707 to 709, and details are not described herein again.

810. The V-EASDF receives the DNS response message from the DNS server.

811. The V-EASDF sends the DNS response message to the V-SMF.

The V-EASDF forwards the DNS response message received in step 810 to the V-SMF.

812. The V-SMF establishes, based on the DNS response message, a local session path for accessing an edge service.

813. The V-SMF sends a DNS message handling rule #3 to the V-EASDF.

Steps 812 to 813 are similar to steps 713 to 714, and details are not described herein again.

814. The V-EASDF forwards the DNS query message to the H-DNS server.

815. The V-EASDF sends a DNS response message to the UE.

As shown in FIG. 8, the V-EASDF may send the DNS response message to the UE by using the V-UPF.

Based on the method 800, the UE may directly use the V-EASDF as the destination address of the DNS query message. According to the method, an edge service discovery mechanism for an HR session can be implemented, that is, an edge service located in a visited network is discovered for UE of the HR session, so that the UE can access the edge service deployed in the VPLMN when establishing the HR session.

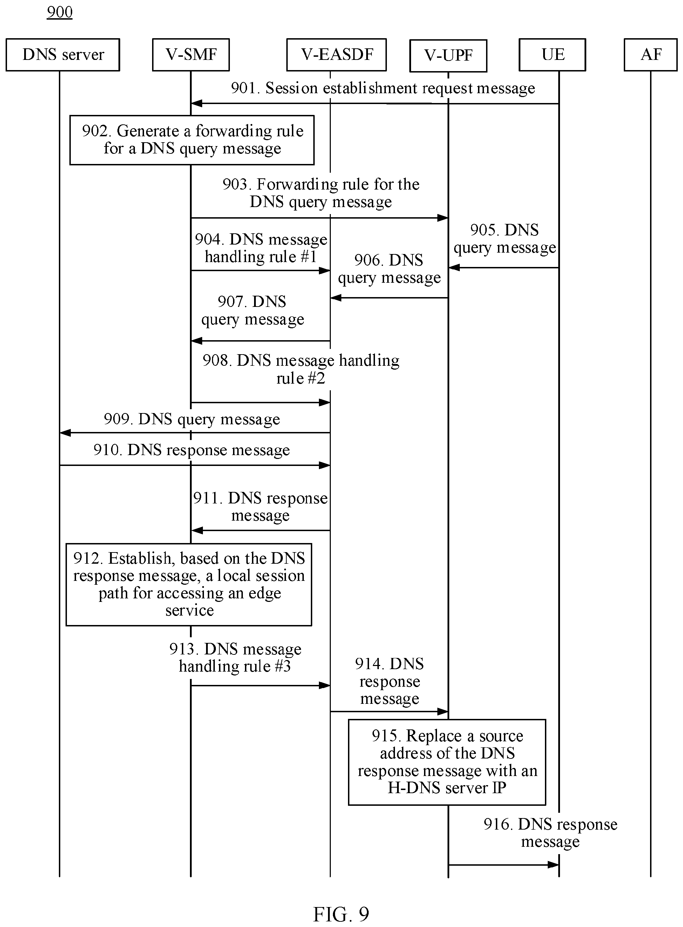

FIG. 9 is a schematic flowchart of another communication method 900 according to an embodiment of this application. The method 900 may include the following steps.

901. UE sends a session establishment request message to a V-SMF.

902. The V-SMF sends the forwarding rule for the DNS query message to a V-UPF.

903. The V-SMF sends the forwarding rule for the DNS query message to a V-UPF.

Steps 901 to 903 are similar to steps 701 to 703. A difference lies in that, in step 903, optionally, the forwarding rule may be further used to indicate the V-UPF to set the destination address of the DNS query message to the V-EASDF IP address. Optionally, the forwarding rule may be further used to indicate the V-UPF to store the H-DNS server IP address used as the destination address of the DNS query message, for subsequent processing on the DNS response message, for example, modifying the source address of the DNS response message to the H-DNS server IP address.

904. The V-SMF sends a DNS message handling rule #1 to the V-EASDF.

Step 904 is similar to step 704, and details are not described herein again.

905. The UE sends a DNS query message to the V-UPF.

A source address of the DNS query message is a UE IP address, and a destination address is an H-DNS server IP address.

906. The V-UPF forwards the DNS query message to the V-EASDF.

The V-UPF processes the DNS query message based on the forwarding rule received in step 903. For example, the forwarding rule indicates the V-UPF to forward a specific DNS query message (for example, a DNS query message sent to the H-DNS server, a DNS query message that matches the target FQDN, a DNS query message that matches the target application identifier, or the like) to the V-EASDF, and set a destination address of the DNS query message to the V-EASDF IP address. The V-UPF forwards, to the V-EASDF, the DNS query message whose destination address is set to the V-EASDF IP address.

It may be understood that the V-UPF may set the destination address of the DNS query message to the V-EASDF IP address based on the forwarding rule received in step 903. This is an example for description. This application is not limited thereto. For example, the V-UPF may alternatively set the destination address of the DNS query message to the V-EASDF IP address based on a local configuration, a protocol specification, the information #1 in the method 500, or the like.

In the method 900, the V-UPF may modify the destination address of the DNS query message to the V-EASDF IP address, and forward a modified DNS query message to the V-EASDF.

Optionally, the V-UPF stores an original destination address of the DNS query message, that is, the H-DNS server IP address. For example, the V-UPF stores the original destination address of the DNS query message, that is, the H-DNS server IP address based on the forwarding rule received in step 1004. In another example, the V-UPF may alternatively store the original destination address of the DNS query message, that is, the H-DNS server IP address based on a local configuration, a protocol specification, or the like.

907. The V-EASDF forwards the DNS query message to the V-SMF.

908. The V-SMF sends a DNS message handling rule #2 to the V-EASDF.

909. The V-EASDF sends the DNS query to a DNS server.

Steps 1007 to 1009 are similar to steps 707 to 709, and details are not described herein again.

910. The V-EASDF receives the DNS response message from the DNS server.

911. The V-EASDF sends the DNS response message to the V-SMF.

912. The V-SMF establishes, based on the DNS response message, a local session path for accessing an edge service.

Steps 910 to 912 are similar to steps 711 to 713, and details are not described herein again.

913. The V-SMF sends a DNS message handling rule #3 to the V-EASDF.

The DNS message handling rule #3 may be used to process the DNS response message.

914. The V-EASDF sends the DNS response message to the V-UPF.

The V-EASDF generates a DNS response message, and sends the DNS response message to the V-UPF. A source address of the DNS response message is set to the V-EASDF address.

915. The V-UPF replaces the source address of the DNS response message with the H-DNS server IP address.

For example, after receiving the DNS response message, the V-UPF replaces, based on the forwarding rule received in step 903, the source address of the DNS response message with the stored H-DNS server IP address (that is, a destination address carried in the DNS query message).

It may be understood that the V-UPF may replace the source address of the DNS response message with the stored H-DNS server IP address based on the forwarding rule received in step 903. This is an example for description. This application is not limited thereto. For example, the V-UPF may alternatively replace the source address of the DNS response message with the stored H-DNS server IP address based on a local configuration, a protocol specification, the information #2 in the method 500, or the like.

916. The V-UPF sends a DNS response message to the UE.

A source address of the DNS response message is the H-DNS server IP address.

As shown in FIG. 9, the V-EASDF may send the DNS response message to the UE via the V-UPF.

Based on the method 900, the V-UPF may modify the destination address of the DNS query message to the V-EASDF address, and forward, to the V-EASDF, a DNS query message whose destination address is modified to the V-EASDF address. In addition, the V-EASDF generates a DNS response message by using an IP address of the V-EASDF, and the V-UPF replaces the V-EASDF address with the stored original destination address, that is, the H-DNS server address. According to the method, an edge service discovery mechanism for an HR session can be implemented, that is, an edge service located in a visited network is discovered for UE of the HR session, so that the UE can access the edge service deployed in the VPLMN when establishing the HR session.

FIG. 10 is a schematic flowchart of another communication method 1000 according to an embodiment of this application. The method 1000 may include the following steps.

1001. UE sends a session establishment request message to a V-SMF.

1002. The V-SMF generates a forwarding rule for a DNS query message.

1003. The V-SMF sends the forwarding rule for the DNS query message to a V-UPF.

Steps 1001 to 1003 are similar to steps 701 to 703. A difference lies in that, in step 1003, optionally, the forwarding rule may be further used to indicate the V-UPF to set the destination address of the DNS query message to the V-EASDF IP address.

1004. The V-SMF sends a DNS message handling rule #1 to the V-EASDF.

Step 1004 is similar to step 704, and details are not described herein again.

1005. The UE sends a DNS query message to the V-UPF.

A source address of the DNS query message is a UE IP address, and a destination address is an H-DNS server IP address.

1006. The V-UPF forwards the DNS query message to the V-EASDF.

The V-UPF processes the DNS query message based on the forwarding rule received in step 1003. For example, the forwarding rule indicates the V-UPF to forward a specific DNS query message (for example, a DNS query message sent to the H-DNS server, a DNS query message that matches the target FQDN, a DNS query message that matches the target application identifier, or the like) to the V-EASDF, and set a destination address of the DNS query message to the V-EASDF IP address. The V-UPF forwards, to the V-EASDF, the DNS query message whose destination address is set to the V-EASDF IP address.

It may be understood that the V-UPF may set the destination address of the DNS query message to the V-EASDF IP address based on the forwarding rule received in step 1003. This is an example for description. This application is not limited thereto. For example, the V-UPF may alternatively set the destination address of the DNS query message to the V-EASDF IP address based on a local configuration, a protocol specification, the information #1 in the method 500, or the like.

In the method 1000, the V-UPF may modify the destination address of the DNS query message to the V-EASDF IP address, and forward a modified DNS query message to the V-EASDF.

Optionally, the method 1000 includes step 1007.

1007. The V-UPF sends the H-DNS server IP address to the V-SMF.

The V-UPF may report the original destination address (the H-DNS server IP) carried in the DNS query to the V-SMF.

1008. The V-EASDF forwards the DNS query message to the V-SMF.

Step 1008 is similar to step 707, and details are not described herein again.

1009. The V-SMF sends a DNS message handling rule #2 to the V-EASDF.

In response to step 1008, the V-SMF may send a new DNS message handling rule #2 to the V-EASDF. The DNS message handling rule #2 indicates a manner in which the V-EASDF further processes the DNS query.

Optionally, the V-SMF may further send the H-DNS server IP address to the V-EASDF. For example, the V-SMF may carry the H-DNS server IP address in the DNS message handling rule #2 and send the DNS message handling rule #2 to the V-EASDF.

1010. The V-EASDF sends the DNS query message to a DNS server.

Step 1010 is similar to step 709, and details are not described herein again.

1011. The V-EASDF receives the DNS response message from the DNS server.

1012. The V-EASDF sends the DNS response message to the V-SMF.

1013. The V-SMF establishes, based on the DNS response message, a local session path for accessing an edge service.

Steps 1011 to 1013 are similar to steps 711 to 713, and details are not described herein again.

1014. The V-SMF sends a DNS message handling rule #3 to the V-EASDF.

The DNS message handling rule #3 may be used to process the DNS response message. In an example, the DNS message handling rule #3 indicates to set the source address of the DNS response message to the H-DNS server IP address. Optionally, the V-SMF sends the H-DNS server IP address to the V-EASDF. For example, the DNS message handling rule #3 carries the H-DNS server IP address.

1015. The V-EASDF generates a DNS response message, where a source address of the DNS response message is set to the H-DNS server IP address.

In a possible implementation, the V-EASDF receives the H-DNS server IP address from the V-SMF. For example, in step 1014 or step 1009, the V-SMF sends the H-DNS server IP address to the V-EASDF.

1016. The V-EASDF sends a DNS response message to the UE.

The DNS response message is the DNS response message generated by the V-EASDF in step 1015.

As shown in FIG. 10, the V-EASDF may send the DNS response message to the UE via the V-UPF.

Based on the method 1000, the V-UPF may modify the destination address of the DNS query message to the V-EASDF address, and forward, to the V-EASDF, a DNS query message whose destination address is modified to the V-EASDF address. In addition, the V-EASDF may obtain an original destination address of the DNS query message, that is, the H-DNS server IP address in a manner (for example, the V-EASDF receives the H-DNS server IP address from the V-SMF), and use the address when generating the DNS response message. According to the method, an edge service discovery mechanism for an HR session can be implemented, that is, an edge service located in a visited network is discovered for UE of the HR session, so that the UE can access the edge service deployed in the VPLMN when establishing the HR session.

It may be understood that the examples in FIG. 7 to FIG. 10 in embodiments of this application are merely intended to help a person skilled in the art understand embodiments of this application, but are not intended to limit embodiments of this application to specific scenarios shown in the examples. A person skilled in the art can apparently make various equivalent modifications or changes based on the examples shown in FIG. 7 to FIG. 10.

It may be further understood that in some of the foregoing embodiments, a message name such as Nsmf_PDUSession_CreateSMContext Request is merely an example.

It may be further understood that in some of the foregoing embodiments, a primary DNS server address (that is, the H-DNS server address) is used as an example for description. It may be understood that the H-DNS server address may alternatively be replaced with the H-EASDF address.

It may be further understood that some optional features in embodiments of this application may not depend on another feature in some scenarios, or may be combined with another feature in some scenarios. This is not limited.

It may be further understood that the solutions in embodiments of this application may be properly combined for use, and explanations or descriptions of terms in the embodiments may be cross-referenced or explained in the embodiments. This is not limited herein.

It may be further understood that values of various numeric sequence numbers in embodiments of this application do not mean execution sequences, are merely for differentiation for ease of description, and should not constitute any limitation on an implementation process of embodiments of this application.

It may be further understood that, in the foregoing method embodiments, the method and the operation that are implemented by the device may alternatively be implemented by a component (for example, a chip or a circuit) of the device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

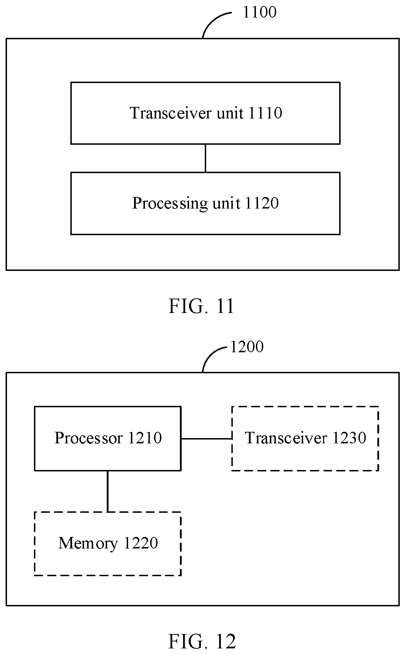

FIG. 11 is a schematic block diagram of a communication apparatus according to an embodiment of this application. The apparatus 1100 includes a transceiver unit 1110 and a processing unit 1120. The transceiver unit 1110 may be configured to implement a corresponding communication function. The transceiver unit 1110 may also be referred to as a communication interface or a communication unit. The processing unit 1120 may be configured to implement a corresponding processing function, for example, modifying an address or the like.

Optionally, the apparatus 1100 further includes a storage unit. The storage unit may be configured to store instructions and/or data. The processing unit 1120 may read the instructions and/or the data in the storage unit, so that the apparatus implements actions of the device or the network element in the foregoing method embodiments.

In a first design, the apparatus 1100 may be the user plane network element in the foregoing embodiments, or may be a component (for example, a chip) of the user plane network element. The apparatus 1100 may implement corresponding steps or procedures performed by the user plane network element in the foregoing method embodiments. The transceiver unit 1110 may be configured to perform sending and receiving related operations by the user plane network element in the foregoing method embodiments. The processing unit 1120 may be configured to perform processing related operations by the user plane network element in the foregoing method embodiments.

In a possible implementation, the transceiver unit 1110 is configured to: receive a domain name system DNS query message from a terminal device, where the DNS query message is used to obtain an edge server address; and send the DNS query message to an edge application server discovery network element based on first information, where the first information is used to forward one or more DNS messages to the edge application server discovery network element; and the user plane network element and the edge application server discovery network element are network elements deployed in a visited network.

For example, the first information includes one or more of the following: a full qualified domain name, an application identifier, an address of a target device, a DNS protocol port number, and an address of the edge application server discovery network element, where the address of the target device is a destination address of the one or more DNS messages, and the target device is a device deployed in a home network.

For example, the first information includes a first parameter and a second parameter, the first parameter is used to detect the one or more DNS messages, and the second parameter is used to determine the edge application server discovery network element.

For example, the first parameter includes one or more of the following: a full qualified domain name, an application identifier, an address of a target device, a DNS protocol port number, and an address of the edge application server discovery network element, where the address of the target device is a destination address of the one or more DNS messages; and the second parameter includes the address of the edge application server discovery network element, where the target device is a device deployed in a home network.

For example, a destination address of the DNS query message is an address of a first device, and the first device is a device deployed in the home network.

Optionally, that the transceiver unit 1110 is configured to send the DNS query message to an edge application server discovery network element includes: The transceiver unit 1110 is configured to send the DNS query message to the edge application server discovery network element through a tunnel, where an address of a receive end of the tunnel is the address of the edge application server discovery network element.

Optionally, that the transceiver unit 1110 is configured to send the DNS query message to an edge application server discovery network element includes: After the processing unit 1120 is configured to replace the destination address of the DNS query message with the address of the edge application server discovery network element, the transceiver unit 1110 is configured to send the DNS query message to the edge application server discovery network element.

Optionally, the transceiver unit 1110 is further configured to receive a DNS response message from the edge application server discovery network element. After the processing unit 1120 is configured to replace a source address of the DNS query message with the address of the first device, the transceiver unit 1110 is configured to send the DNS response message to the terminal device, where the address of the first device is the destination address of the DNS response message, and the first device is a device deployed in the home network.

Optionally, the transceiver unit 1110 is further configured to receive second information from a session management network element, where the second information indicates to replace the source address of the DNS response message with the address of the first device.

Optionally, the transceiver unit 1110 is further configured to receive the first information from the session management network element.

In a second design, the apparatus 1100 may be the session management network element in the foregoing embodiments, or may be a component (for example, a chip) of the session management network element. The apparatus 1100 may implement corresponding steps or procedures performed by the session management network element in the foregoing method embodiments. The transceiver unit 1110 is configured to perform sending and receiving related operations by the session management network element in the foregoing method embodiments. The processing unit 1120 is configured to perform processing related operations by the session management network element in the foregoing method embodiments.

In a possible implementation, the processing unit 1120 is configured to determine first information for a home routed session, where the first information is used to forward one or more domain name system DNS messages to an edge application server discovery network element; and the transceiver unit 1110 is configured to send the first information to a user plane network element, where the user plane network element, the edge application server discovery network element, and the session management network element are network elements deployed in a visited network.

For example, the first information includes one or more of the following: a full qualified domain name, an application identifier, an address of a target device, a DNS protocol port number, and an address of the edge application server discovery network element, where the address of the target device is a destination address of the one or more DNS messages, and the target device is a device deployed in a home network.

For example, the first information includes a first parameter and a second parameter, the first parameter is used to detect the one or more DNS messages, and the second parameter is used to determine the edge application server discovery network element.

For example, the first parameter includes one or more of the following: a full qualified domain name, an application identifier, an address of a target device, a DNS protocol port number, and an address of the edge application server discovery network element, where the address of the target device is a destination address of the one or more DNS messages; and the second parameter includes the address of the edge application server discovery network element, where the target device is a device deployed in a home network.

Optionally, that the processing unit 1120 is configured to determine first information includes: The processing unit 1120 is configured to determine the first information based on deployment information of an edge server.

Optionally, the transceiver unit 1110 is further configured to send second information to the user plane network element, where the second information indicates to replace a source address of a DNS response message with an address of a first device, the address of the first device is a destination address of a DNS query message, and the first device is a device deployed in the home network.

It should be understood that a specific process in which the units perform the foregoing corresponding steps is described in detail in the foregoing method embodiments. For brevity, details are not described herein.

It should be further understood that the apparatus 1100 is embodied in a form of a functional unit. The term "unit" herein may refer to an application-specific integrated circuit (application-specific integrated circuit, ASIC), an electronic circuit, a processor (for example, a shared processor, a dedicated processor, a group processor, or the like) configured to execute one or more software or firmware programs, a memory, a merged logic circuit, and/or another appropriate component that supports the described function. In an optional example, a person skilled in the art may understand that, the apparatus 1100 may be specifically the user plane network element in the foregoing embodiments, and may be configured to perform procedures and/or steps corresponding to the user plane network element in the foregoing method embodiments; or the apparatus 1100 may be specifically the session management network element in the foregoing embodiments, and may be configured to perform procedures and/or steps corresponding to the session management network element in the foregoing method embodiments; or the apparatus 1100 may be specifically the edge application server discovery network element in the foregoing embodiments, and may be configured to perform procedures and/or steps corresponding to the edge application server discovery network element in the foregoing method embodiments. To avoid repetition, details are not described herein again.

The apparatus 1100 in each of the foregoing solutions has a function of implementing corresponding steps performed by the network element (for example, the user plane network element, the session management network element, or the edge application server discovery network element) in the foregoing method. The function may be implemented by hardware, or may be implemented by hardware executing corresponding software. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as a processing unit or the like may be replaced with a processor, to separately perform sending and receiving operations and a related processing operation in the method embodiments.

In addition, the transceiver unit 1110 may alternatively be a transceiver circuit (for example, the transceiver circuit may include a receiver circuit and a transmitter circuit), and the processing unit may be a processing circuit.

It should be noted that the apparatus in FIG. 11 may be the network element or the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 12, an embodiment of this application provides another communication apparatus 1200. The apparatus 1200 includes a processor 1210. The processor 1210 is configured to execute a computer program or instructions stored in a memory 1220, or read data/signaling stored in the memory 1220, to perform the methods in the foregoing method embodiments. Optionally, there are one or more processors 1210.

Optionally, as shown in FIG. 12, the apparatus 1200 further includes a memory 1220. The memory 1220 is configured to store a computer program or instructions and/or data. The memory 1220 and the processor 1210 may be integrated or may be separately arranged. Optionally, there are one or more memories 1220.

Optionally, as shown in FIG. 12, the apparatus 1200 further includes a transceiver 1230. The transceiver 1230 is configured to receive and/or send a signal. For example, the processor 1210 is configured to control the transceiver 1230 to receive and/or send a signal.

In a solution, the apparatus 1200 is configured to implement operations performed by the network element in the foregoing method embodiments.

For example, the processor 1210 is configured to execute the computer program or instructions stored in the memory 1220, to implement related operations by the user plane network element in the foregoing method embodiments, for example, the method performed by the user plane network element in the embodiment shown in FIG. 5, or the method performed by the V-UPF in any embodiment shown in FIG. 7 to FIG. 10.

In another example, the processor 1210 is configured to execute the computer program or instructions stored in the memory 1220, to implement related operations by the session management network element in the foregoing method embodiments, for example, the method performed by the session management network element in the embodiment shown in FIG. 5, or the method performed by the V-SMF in any embodiment shown in FIG. 7 to FIG. 10.

In another example, the processor 1210 is configured to execute the computer program or instructions stored in the memory 1220, to implement related operations by the edge application server discovery network element in the foregoing method embodiments, for example, the method performed by the edge application server discovery network element in the embodiment shown in FIG. 5, or the method performed by the V-EASDF in any embodiment shown in FIG. 7 to FIG. 10.

It should be understood that the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable ROM (programmable ROM, PROM), an erasable PROM (erasable PROM, EPROM), an electrically EPROM (electrically EPROM, EEPROM), or a flash memory. The volatile memory may be a random access memory (random access memory, RAM). For example, the RAM may be used as an external cache. By way of example rather than limitation, the RAM includes the following various forms: a static RAM (static RAM, SRAM), a dynamic RAM (dynamic RAM, DRAM), a synchronous DRAM (synchronous DRAM, SDRAM), a double data rate SDRAM (double data rate SDRAM, DDR SDRAM), an enhanced SDRAM (enhanced SDRAM, ESDRAM), a synchlink DRAM (synchlink DRAM, SLDRAM), and a direct rambus RAM (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

An embodiment of this application further provides a computer-readable storage medium, where the computer-readable storage medium stores computer instructions for implementing the method performed by the network element in the foregoing method embodiments.

For example, when the computer program is executed by a computer, the computer is enabled to implement the method performed by the user plane network element in the foregoing method embodiments.

In another example, when the computer program is executed by a computer, the computer is enabled to implement the method performed by the session management network element in the foregoing method embodiments.

In another example, when the computer program is executed by a computer, the computer is enabled to implement the method performed by the edge application server discovery network element in the foregoing method embodiments.

An embodiment of this application further provides a computer program product, including instructions. When the instructions are executed by a computer, the method performed by the network element in the foregoing method embodiments is implemented.

An embodiment of this application further provides a communication system, including one or more of the following network elements: the user plane network element, the session management network element, and the edge application server discovery network element.

For explanations and beneficial effects of related content of any one apparatus provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, microwave, or the like) manner. The computer-readable storage medium may be any usable medium accessible by the computer, or a data storage device, for example, a server, a data center, or the like, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

## Claims

1. A communication method (500, 700, 900, 1000) performed by a user plane network element, the method comprising:
receiving (510, 705, 905, 1005) a domain name system, DNS, query message from a terminal device that is roaming a visited network, wherein the DNS query message is used to obtain an edge server address, and a destination address of the DNS query message is an address of a DNS server in a home network; and
sending (520, 706, 906, 1006) the DNS query message to an edge application server discovery network element in the visited network based on first information, wherein the first information is used to forward one or more DNS query messages to the edge application server discovery network element in the visited network, the first information comprises the address of the DNS server in the home network and an address of the edge application server discovery network element in the visited network, and the address of the DNS server in the home network is a destination address of the one or more DNS query messages; and
wherein the user plane network element is deployed in the visited network.

2. The method (500, 900) according to claim 1, wherein the sending the DNS query message to an edge application server discovery network element comprises:
sending (520, 906) the DNS query message to the edge application server discovery network element in the visited network after replacing the destination address of the DNS query message with the address of the edge application server discovery network element in the visited network.

3. The method (900) according to claim 2, wherein the method further comprises:
receiving (914) a DNS response message from the edge application server discovery network element in the visited network; and
sending (916) the DNS response message to the terminal device after replacing a source address of the DNS response message with the address of the DNS server in the home network.

4. The method (900) according to claim 3, wherein the method further comprises:
receiving (903) second information from a session management network element, wherein the second information indicates to replace the source address of the DNS response message with the address of the DNS server in the home network.

5. The method (900) according to any one of claims 1 to 4, wherein the method further comprises:
receiving (903) the first information from the session management network element.

6. The method (900) according to any one of claims 1 to 5, wherein the user plane network element is a user plane function, UPF, network element of a fifth generation, 5G, communication system.

7. The method according to any one of claims 1 to 6, wherein the method comprises:
detecting the one or more DNS query messages based on the address of the DNS server in the home network included in the first information.

8. A communication method performed by a session management network element, the method comprising:
determining (702, 902, 1002) first information for a home routed session, wherein the first information is used to forward one or more domain name system, DNS, query messages sent by a terminal device roaming a visited network to an edge application server discovery network element in the visited network, the first information comprises an address of a DNS server in a home network and an address of the edge application server discovery network element in the visited network, and the address of the DNS server in the home network is a destination address of the one or more DNS query messages; and
sending (703, 903, 1003) the first information to a user plane network element in the visited network; and
wherein the session management network element is deployed in the visited network.

9. The method according to any one of claims 1 to 8, wherein the first information further comprises one or more of the following: a fully qualified domain name, an application identifier, and a DNS protocol port number.

10. The method according to claim 8 or 9, wherein the method further comprises:
sending (903) second information to the user plane network element, wherein the second information indicates to replace a source address of a DNS response message with the address of the DNS server in the home network.

11. The method according to any one of claims 8 to 10, wherein the session management network element is a session management function, SMF, network element of a fifth generation, 5G, communication system.

12. A communication apparatus (1100, 1200), configured to perform the method according to any one of claims 1 to 11.

13. A computer-readable storage medium, wherein the computer-readable storage medium stores a computer program, and when the computer program is run on a computer, the computer is enabled to perform the method according to any one of claims 1 to 7 and 9; or the computer is enabled to perform the method according to any one of claims 8 to 11.

14. A computer program product, wherein the computer program product comprises instructions used to perform the method according to any one of claims 1 to 7 and 9, or the computer program product comprises instructions used to perform the method according to any one of claims 8 to 11.

15. A communication system, comprising a user plane network element and a session management network element, wherein
the user plane network element is configured to perform the method according to any one of claims 1 to 7 and 9; and
the session management network element is configured to perform the method according to any one of claims 8 to 11.

## Patentansprüche

1. Kommunikationsverfahren (500, 700, 900, 1000), das durch ein Benutzerebenennetzwerkelement durchgeführt wird, wobei das Verfahren Folgendes umfasst:
Empfangen (510, 705, 905, 1005) einer Abfragenachricht des Domainnamensystems, DNS-Abfragenachricht, aus einer Endgerätevorrichtung, die in einem besuchten Netzwerk roamt, wobei die DNS-Abfragenachricht verwendet wird, um eine Edge-Server-Adresse zu erlangen, und eine Zieladresse der DNS-Abfragenachricht eine Adresse eines DNS-Servers in einem Heimnetzwerk ist; und
Senden (520, 706, 906, 1006) der DNS-Abfragenachricht an ein Edge-Applikationsserver-Erkennungsnetzwerkelement in dem besuchten Netzwerk basierend auf ersten Informationen, wobei die ersten Informationen verwendet werden, um eine oder mehrere DNS-Abfragenachrichten an das Edge-Applikationsserver-Erkennungsnetzwerkelement in dem besuchten Netzwerk weiterzuleiten, die ersten Informationen die Adresse des DNS-Servers in dem Heimnetzwerk und eine Adresse des Edge-Applikationsserver-Erkennungsnetzwerkelements in dem besuchten Netzwerk umfassen, und die Adresse des DNS-Servers in dem Heimnetzwerk eine Zieladresse der einen oder der mehreren DNS-Abfragenachrichten ist; und
wobei das Benutzerebenennetzwerkelement in dem besuchten Netzwerk eingesetzt wird.

2. Verfahren (500, 900) nach Anspruch 1, wobei das Senden der DNS-Abfragenachricht an ein Edge-Anwendungsserver-Erkennungsnetzwerkelement Folgendes umfasst:
Senden (520, 906) der DNS-Abfragenachricht an das Edge-Anwendungsserver-Erkennungsnetzwerkelement in dem besuchten Netzwerk nach dem Ersetzen der Zieladresse der DNS-Abfragenachricht durch die Adresse des Edge-Anwendungsserver-Erkennungsnetzwerkelements in dem besuchten Netzwerk.

3. Verfahren (900) nach Anspruch 2, wobei das Verfahren ferner Folgendes umfasst:
Empfangen (914) einer DNS-Antwortnachricht aus dem Edge-Anwendungsserver-Erkennungsnetzwerkelement in dem besuchten Netzwerk; und
Senden (916) der DNS-Antwortnachricht an die Endgerätevorrichtung nach dem Ersetzen einer Quelladresse der DNS-Antwortnachricht durch die Adresse des DNS-Servers in dem Heimnetzwerk.

4. Verfahren (900) nach Anspruch 3, wobei das Verfahren ferner Folgendes umfasst:
Empfangen (903) zweiter Informationen aus einem Sitzungsverwaltungsnetzwerkelement, wobei die zweiten Informationen anweisen, die Quelladresse der DNS-Antwortnachricht durch die Adresse des DNS-Servers in dem Heimnetzwerk zu ersetzen.

5. Verfahren (900) nach einem der Ansprüche 1 bis 4, wobei das Verfahren ferner Folgendes umfasst:
Empfangen (903) der ersten Informationen aus dem Sitzungsverwaltungsnetzwerkelement.

6. Verfahren (900) nach einem der Ansprüche 1 bis 5, wobei das Benutzerebenennetzwerkelement ein Netzwerkelement der Benutzerebenenfunktion, UPF, eines Kommunikationssystems der fünften Generation, 5G-Kommunikationssystems, ist.

7. Verfahren nach einem der Ansprüche 1 bis 6, wobei das Verfahren Folgendes umfasst:
Erkennen der einen oder der mehreren DNS-Abfragenachrichten basierend auf der Adresse des DNS-Servers in dem Heimnetzwerk, die in den ersten Informationen enthalten ist.

8. Kommunikationsverfahren, das durch ein Sitzungsverwaltungsnetzwerkelement durchgeführt wird, wobei das Verfahren Folgendes umfasst:
Bestimmen (702, 902, 1002) erster Informationen für eine heimgesteuerte Sitzung, wobei die ersten Informationen verwendet werden, um eine oder mehrere Abfragenachrichten des Domainnamensystems, DNS-Abfragenachrichten, die durch eine Endgerätevorrichtung, die ein besuchtes Netzwerk roamt, gesendet werden, an ein Edge-Applikationsserver-Erkennungsnetzwerkelement in dem besuchten Netzwerk weiterzuleiten, die ersten Informationen eine Adresse eines DNS-Servers in einem Heimnetzwerk und eine Adresse des Edge-Applikationsserver-Erkennungsnetzwerkelements in dem besuchten Netzwerk umfassen, und die Adresse des DNS-Servers in dem Heimnetzwerk eine Zieladresse der einen oder der mehreren DNS-Abfragenachrichten ist; und
Senden (703, 903, 1003) der ersten Informationen an ein Benutzerebenennetzwerkelement in dem besuchten Netzwerk; und
wobei das Sitzungsverwaltungsnetzwerkelement in dem besuchten Netzwerk eingesetzt wird.

9. Verfahren nach einem der Ansprüche 1 bis 8, wobei die ersten Informationen ferner eine oder mehrere der folgenden Informationen umfassen: einen vollqualifizierten Domänennamen, eine Anwendungskennung und eine DNS-Protokoll-Portnummer.

10. Verfahren nach Anspruch 8 oder 9, wobei das Verfahren ferner Folgendes umfasst:
Senden (903) zweiter Informationen an das Benutzerebenennetzwerkelement, wobei die zweiten Informationen anweisen, eine Quelladresse einer DNS-Antwortnachricht durch die Adresse des DNS-Servers in dem Heimnetzwerk zu ersetzen.

11. Verfahren nach einem der Ansprüche 8 bis 10, wobei das Sitzungsverwaltungsnetzwerkelement ein Netzwerkelement der Sitzungsverwaltungsfunktion, SMF, eines Kommunikationssystems der fünften Generation, 5G-Kommunikationssystems, ist.

12. Kommunikationsvorrichtung (1100, 1200), das dazu konfiguriert ist, das Verfahren nach einem der Ansprüche 1 bis 11 durchzuführen.

13. Computerlesbares Speichermedium, wobei das computerlesbare Speichermedium ein Computerprogramm speichert, und, wenn das Computerprogramm auf einem Computer ausgeführt wird, der Computer in die Lage versetzt wird, das Verfahren nach einem der Ansprüche 1 bis 7 und 9 durchzuführen; oder der Computer in die Lage versetzt wird, das Verfahren nach einem der Ansprüche 8 bis 11 durchzuführen.

14. Computerprogrammprodukt, wobei das Computerprogrammprodukt Anweisungen umfasst, die verwendet werden, um das Verfahren nach einem der Ansprüche 1 bis 7 und 9 durchzuführen, oder das Computerprogrammprodukt Anweisungen umfasst, die verwendet werden, um das Verfahren nach einem der Ansprüche 8 bis 11 durchzuführen.

15. Kommunikationssystem, umfassend ein Benutzerebenennetzwerkelement und ein Sitzungsverwaltungsnetzwerkelement, wobei
das Benutzerebenennetzwerkelement dazu konfiguriert ist, das Verfahren nach einem der Ansprüche 1 bis 7 und 9 durchzuführen; und
das Sitzungsverwaltungsnetzwerkelement dazu konfiguriert ist, das Verfahren nach einem der Ansprüche 8 bis 11 durchzuführen.

## Revendications

1. Procédé de communication (500, 700, 900, 1000) réalisé par un élément de réseau de plan utilisateur, le procédé comprenant :
la réception (510, 705, 905, 1005) d'un message de demande de système de noms de domaine, DNS, à partir d'un dispositif terminal en itinérance sur un réseau visité, dans lequel le message de demande DNS est utilisé pour obtenir l'adresse d'un serveur périphérique, et l'adresse de destination du message de demande DNS est l'adresse d'un serveur DNS du réseau domestique ; et
l'envoi (520, 706, 906, 1006) du message de demande DNS à un élément de réseau de découverte de serveur d'application périphérique dans le réseau visité, sur la base de premières informations, dans lequel les premières informations sont utilisées pour transmettre un ou plusieurs messages de demande DNS à l'élément de réseau de découverte de serveur d'application périphérique dans le réseau visité, les premières informations comprennent l'adresse du serveur DNS du réseau domestique et une adresse de l'élément de réseau de découverte de serveur d'application périphérique dans le réseau visité, l'adresse du serveur DNS du réseau domestique est l'adresse de destination des un ou plusieurs messages de demande DNS ; et
dans lequel l'élément de réseau de plan utilisateur est déployé dans le réseau visité.

2. Procédé (500, 900) selon la revendication 1, dans lequel l'envoi du message de demande DNS à un élément de réseau de découverte de serveur d'application périphérique comprend :
l'envoi (520, 906) du message de demande DNS à l'élément de réseau de découverte de serveur d'application périphérique dans le réseau visité après avoir remplacé l'adresse de destination du message de demande DNS par l'adresse de l'élément de réseau de découverte de serveur d'application périphérique dans le réseau visité.

3. Procédé (900) selon la revendication 2, dans lequel le procédé comprend également :
la réception (914) d'un message de réponse DNS à partir de l'élément de réseau de découverte de serveur d'application périphérique dans le réseau visité ; et
l'envoi (916) du message de réponse DNS au dispositif terminal après avoir remplacé l'adresse source du message de réponse DNS par l'adresse du serveur DNS du réseau domestique.

4. Procédé (900) selon la revendication 3, dans lequel le procédé comprend également :
la réception (903) de secondes informations à partir d'un élément de réseau de gestion de session, dans lequel les secondes informations indiquent de remplacer l'adresse source du message de réponse DNS par l'adresse du serveur DNS dans le réseau domestique.

5. Procédé (900) selon l'une quelconque des revendications 1 à 4, dans lequel le procédé comprend également :
la réception (903) des premières informations à partir du premier élément de réseau de gestion de session.

6. Procédé (900) selon l'une quelconque des revendications 1 à 5, dans lequel l'élément de réseau de plan utilisateur est un élément de réseau de fonction de plan utilisateur, UPF, d'un système de communication de cinquième génération, 5G.

7. Procédé selon l'une quelconque des revendications 1 à 6, dans lequel le procédé comprend :
la détection des un ou plusieurs messages de demande DNS sur la base de l'adresse du serveur DNS du réseau domestique incluse dans les premières informations.

8. Procédé de communication réalisé par un élément de réseau de gestion de session, le procédé comprenant :
la détermination (702, 902, 1002) des premières informations d'une session routée domestique, dans lequel les premières informations sont utilisées pour transmettre un ou plusieurs messages de demande de système de noms de domaine, DNS, envoyés par un dispositif terminal en itinérance sur un réseau visité à un élément de réseau de découverte de serveur d'application périphérique, les premières informations comprennent une adresse du serveur DNS du réseau domestique et une adresse de l'élément de réseau de découverte de serveur d'application périphérique dans le réseau visité, et l'adresse du serveur DNS du réseau domestique est une adresse de destination des un ou plusieurs messages de demande DNS ; et
l'envoi (703, 903, 1003) des premières informations à un élément de réseau de plan utilisateur dans le réseau visité ; et
dans lequel l'élément de réseau de gestion de session est déployé dans le réseau visité.

9. Procédé selon l'une quelconque des revendications 1 à 8, dans lequel les premières informations comprennent également l'un ou plusieurs : d'un nom de domaine entièrement qualifié, d'un identifiant d'application et d'un numéro de port de protocole DNS.

10. Procédé selon la revendication 8 ou 9, dans lequel le procédé comprend également :
l'envoi (903) de secondes informations à l'élément de réseau de plan utilisateur, dans lequel les secondes informations indiquent de remplacer une adresse source d'un message de réponse DNS par l'adresse du serveur DNS dans le réseau domestique.

11. Procédé selon l'une quelconque des revendications 8 à 10, dans lequel l'élément de réseau de gestion de session est un élément de réseau de fonction de gestion de session, SMF, d'un système de communication de cinquième génération, 5G.

12. Appareil de communication (1100, 1200), configuré pour réaliser le procédé selon l'une quelconque des revendications 1 à 11.

13. Support de stockage lisible par ordinateur, dans lequel le support de stockage lisible par ordinateur stocke un programme informatique, et lorsque le programme informatique est exécuté sur un ordinateur, l'ordinateur est activé pour réaliser le procédé selon l'une quelconque des revendications 1 à 7 et 9 ; ou l'ordinateur est activé pour réaliser le procédé selon l'une quelconque des revendications 8 à 11.

14. Produit de programme informatique, dans lequel le produit de programme informatique comprend des instructions utilisées pour réaliser le procédé selon l'une quelconque des revendications 1 à 7 et 9, ou le produit de programme informatique comprend des instructions utilisées pour réaliser le procédé selon l'une quelconque des revendications 8 à 11.

15. Système de communication, comprenant un élément de réseau de plan utilisateur et un élément de réseau de gestion de session, dans lequel
l'élément de réseau de plan utilisateur est configuré pour réaliser le procédé selon l'une quelconque des revendications 1 à 7 et 9 ; et
l'élément de réseau de gestion de session est configuré pour réaliser le procédé selon l'une quelconque des revendications 8 à 11.
